(19) Europäisches Patentamt / European Patent Office / Office européen des brevets

(11) **EP 4 459 397 A1**

(12) **EUROPEAN PATENT APPLICATION**
published in accordance with Art. 153(4) EPC

(43) Date of publication:
**06.11.2024 Bulletin 2024/45**

(51) International Patent Classification (IPC):
*G05B 19/4093* (2006.01)

(21) Application number: **23918050.8**

(86) International application number:
**PCT/JP2023/004823**

(22) Date of filing: **13.02.2023**

(87) International publication number:
**WO 2024/171262 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Sumitomo Electric Hardmetal Corp.**
**Itami-shi, Hyogo 664-0016 (JP)**

(72) Inventors:
• **KOIKE, Yusuke**
  **Itami-shi, Hyogo 6640016 (JP)**
• **IKENAGA, Shinya**
  **Itami-shi, Hyogo 6640016 (JP)**

(74) Representative: **Boult Wade Tennant LLP**
**Salisbury Square House**
**8 Salisbury Square**
**London EC4Y 8AP (GB)**

(54) **MACHINING CONDITION DETERMINATION ASSISTANCE DEVICE, MACHINING CONDITION DETERMINATION ASSISTANCE SYSTEM, DISPLAY DEVICE, MACHINING CONDITION DETERMINATION ASSISTANCE METHOD, AND MACHINING CONDITION DETERMINATION ASSISTANCE PROGRAM**

(57) Provided is a machining condition determination support device that supports determination of a machining condition for a machine tool that machines a workpiece with a tool. The device includes: a determination unit configured to, based on target shape information indicating a shape of the workpiece, path information indicating a movement path of the tool, and tool shape information indicating a shape of the tool, determine a contact position between the tool and the workpiece when the tool moves along the movement path; and a first generation unit configured to generate contact position information indicating temporal transition of the contact position when the tool moves along the movement path.

FIG. 11

**Description**

**TECHNICAL FIELD**

The present disclosure relates to a machining condition determination support device, a machining condition determination support system, a display device, a machining condition determination support method, and a machining condition determination support program.

**BACKGROUND ART**

When a workpiece is machined with a machine tool such as a milling tool which performs rotating machining, it is necessary to determine machining conditions including the shape of the tool used for machining the workpiece, the movement path of the tool, and the shape of the workpiece. If the machining conditions are not appropriate, excessive load may be applied to a main spindle of the machine tool, or a burr or chipping may occur when the workpiece is machined.

PATENT LITERATURE 1 discloses a device that estimates machining state information in virtual machining of a workpiece, based on control information used in machining with an NC machine tool, and transforms the machining state information into an image. PATENT LITERATURE 1 discloses that, in machining using an end mill, variation in the cutting amount of a cutting edge along the time axis is expressed as a single-color gradation which is an example of the machining state information.

**CITATION LIST**

[PATENT LITERATURE]

PATENT LITERATURE 1: International Publication No. WO2021/025149

PATENT LITERATURE 2: Japanese Laid-Open Patent Publication No. 2016-162149

PATENT LITERATURE 3: Japanese Laid-Open Patent Publication No. 2017-68586

PATENT LITERATURE 4: Japanese Laid-Open Patent Publication No. S63-298571

PATENT LITERATURE 5: Japanese Laid-Open Patent Publication No. H7-72914

PATENT LITERATURE 6: Japanese Laid-Open Patent Publication No. H5-237740

PATENT LITERATURE 7: Japanese Laid-Open Patent Publication No. H5-123938

PATENT LITERATURE 8: Japanese Laid-Open Patent Publication No. 2021-26598

PATENT LITERATURE 9: Japanese Laid-Open Patent Publication No. 2008-134813

PATENT LITERATURE 10: Japanese Laid-Open Patent Publication No. 2002-116807

PATENT LITERATURE 11: Japanese Laid-Open Patent Publication No. 2002-200540

**SUMMARY OF THE INVENTION**

A machining condition determination support device according to an aspect of the present disclosure is a device that supports determination of a machining condition for a machine tool that machines a workpiece with a tool. The device includes: a determination unit configured to, based on target shape information indicating a shape of the workpiece, path information indicating a movement path of the tool, and tool shape information indicating a shape of the tool, determine a contact position between the tool and the workpiece when the tool moves along the movement path; and a first generation unit configured to generate contact position information indicating temporal transition of the contact position when the tool moves along the movement path.

The present disclosure can be realized not only as the machining condition determination support device having such a characteristic configuration as described above, but also as a machining condition determination support system including the machining condition determination support device, a display device that displays characteristic information generated by the machining condition determination support device, or a machining condition determination support method including, as a step, a characteristic process in the machining condition determination support device. The present disclosure can be realized as a computer program that causes a computer to function as the machining condition determination support device, or a semiconductor integrated circuit that realizes a part or all of the machining condition determination support device.

**BRIEF DESCRIPTION OF DRAWINGS**

FIG. 1 shows an example of an overall configuration of a machining condition determination support system according to an embodiment.

FIG. 2A is a side view showing an example of a configuration of a tool according to the embodiment.

FIG. 2B is a plan view showing the example of the configuration of the tool according to the embodiment.

FIG. 3A is a side view showing another example of the configuration of the tool according to the embodiment.

FIG. 3B is a plan view showing the other example of the configuration of the tool according to the embodiment.

FIG. 4 illustrates a feed per tooth.

FIG. 5A illustrates an undeformed chip thickness.

FIG. 5B illustrates the undeformed chip thickness.

FIG. 5C illustrates the undeformed chip thickness.

FIG. 6A illustrates an engage angle.

FIG. 6B illustrates a disengage angle.

FIG. 7 illustrates a case in which a burr occurs.

FIG. 8 illustrates a case in which chipping occurs.

FIG. 9 is a block diagram showing an example of a hardware configuration of a machining condition determination support device according to the embodiment.

FIG. 10 illustrates the relationship between a relative position between a tool and a workpiece, and a load torque on a main spindle of the machine tool.

FIG. 11 is a functional block diagram showing an examples of functions of the machining condition determination support device according to the embodiment.

FIG. 12 shows an example of target shape information.

FIG. 13 illustrates an example of determining a contact position between a tool and a workpiece.

FIG. 14 is a graph showing an example of contact position information.

FIG. 15 is a graph showing an example of cut depth information.

FIG. 16 is a graph showing an example of undeformed chip thickness information.

FIG. 17 illustrates an evaluation test for evaluating influence of the number of teeth on the undeformed chip thickness.

FIG. 18A illustrates an evaluation result in the case where the number of teeth is 2.

FIG. 18B illustrates an evaluation result in the case where the number of teeth is 4.

FIG. 19 is a graph showing an example of representative value information.

FIG. 20 is a graph showing an example of machining time information.

FIG. 21 illustrates a first comparison process.

FIG. 22 illustrates a second comparison process.

FIG. 23 shows a first display example of support information on a display device.

FIG. 24 shows a second display example of the support information on the display device.

FIG. 25 shows a third display example of the support information on the display device.

FIG. 26 is a flowchart showing an example of a machining condition determination support process.

**DETAILED DESCRIPTION**

[Problems to be solved by the present disclosure]

In the device disclosed in PATENT LITERATURE 1, although variation in the cutting amount of the cutting edge along the time axis is transformed into an image, the movement path of the tool is not shown in this image. Without the movement path of the tool, it is not possible to determine what kind of load is applied to the tool at which part of the workpiece.

<Effects of the present disclosure>

According to the present disclosure, it is possible to generate information that allows determination as to what kind of load is applied to a tool at which part of a workpiece.

<Outline of embodiment of the present disclosure>

Hereinafter, the outline of an embodiment of the present disclosure is listed and described.

(1) A machining condition determination support device according to the present embodiment is a device that supports determination of a machining condition for a machine tool that machines a workpiece with a tool. The device includes: a determination unit configured to, based on target shape information indicating a shape of the workpiece, path information indicating a movement path of the tool, and tool shape information indicating a shape of the tool, determine a contact position between the tool and the workpiece when the tool moves along the movement path; and a first generation unit configured to generate contact position information indicating temporal transition of the contact position when the tool moves along the movement path. Thus, it is possible to generate the contact position information that allows determination as to how the contact position between the tool and the workpiece transitions with time when the tool moves along the movement path.

(2) In the above (1), the contact position information may be a graph including a first axis that indicates a position at which the tool is in contact with the workpiece in an apparent rotation circle of the tool, and a second axis that indicates time or the position of the tool. Thus, it is possible to generate the contact position information that allows visual determination as to how the contact position between the tool and the workpiece transitions with time.

(3) In the above (1) or (2), the device may further include a second generation unit configured to, based on the contact position information generated by the first generation unit, generate cut depth information indicating temporal transition of a radial depth of cut of the tool with respect to the workpiece. Thus, it is possible to generate the cut depth information that allows determination as to how the depth of cut of the tool transitions with time when the tool moves along the movement path.

(4) In the above (3), the cut depth information may be a graph including a first axis that indicates the radial depth of cut of the tool, and a second axis that indicates time or the position of the tool. Thus, it is possible to generate the cut depth information that allows visual determination as to how the depth of cut of the tool transitions with time.

(5) In any one of the above (1) to (4), the device may further include a third generation unit configured to, based on the contact position information generated by the first generation unit, generate undeformed chip thickness information indicating temporal transition of an actual undeformed chip thickness for each number of teeth when the number of teeth of the tool is changed. Thus, it is possible to generate the undeformed chip thickness information that allows determination as to how the actual undeformed chip thickness for each number of teeth transitions with time when the number of teeth of the tool is changed.

(6) In the above (5), the undeformed chip thickness information may be a graph including a first axis that indicates a sum of actual undeformed chip thicknesses corresponding to each number of teeth, and a second axis that indicates time or the position of the tool. Thus, it is possible to generate the undeformed chip thickness information that allows visual determination as to how the actual undeformed chip thickness transitions with time, for each number of teeth, when the number of teeth of the tool is changed.

(7) In the above (5) or (6), the device may further include a fourth generation unit configured to, based on the undeformed chip thickness information generated by the third generation unit, generate representative value information indicating a representative value, for each number of teeth, of the actual undeformed chip thickness. Thus, it is possible to generate the representative value information that allows determination, for each number of teeth, of the representative value of the actual undeformed chip thickness related to a load torque on a main spindle.

(8) In the above (7), the device may further include a calculation unit configured to, based on the path information and the number of teeth of the tool, calculate, for each number of teeth, a machining time of the workpiece by the tool. Thus, it is possible to generate information that allows determination, for each number of teeth, of the machining time related to productivity of a product to be produced by machining the workpiece.

(9) In the above (8), the device may further include a recommendation unit configured to determine a recommended number of teeth that is the number of teeth of the tool recommended for machining of the workpiece, based on the representative value information generated by the fourth generation unit and the machining time for each number of teeth calculated by the calculation unit. Thus, it is possible to determine the number of teeth of the tool recommended for machining of the workpiece in terms of the load torque on the main spindle and the machining time.

(10) In the above (9), the recommendation unit may determine, as the recommended number of teeth, a number of teeth at which the representative value of the actual undeformed chip thickness is less than or equal to a first threshold value and the machining time is shorter than or equal to a second threshold value. Thus, it is possible to determine the number of teeth of the tool recommended for machining of the workpiece, by using the first threshold value and the second threshold value that are set based on an allowable range of the load torque on the main spindle and an allowable range of the machining time.

(11) In any one of the above (1) to (10), the device may further include a display unit configured to display support information including the contact position information generated by the first generation unit. Thus, it is possible to provide the user with the support information including the contact position information that allows determination as to how the contact position between the tool and the workpiece transitions with time when the tool moves along the movement path.

(12) In the above (11), the display unit may simultaneously display first support information including first contact position information generated based on first path information indicating a first movement path of the tool, and second support information including second contact position information generated based on second path information indicating a second movement path different from the first movement path. Thus, the user can judge which one of the first movement path and the second movement path is suitable for machining of the workpiece.

(13) In any one of the above (1) to (12), the target shape information is information representing the shape of the workpiece as a set of unit elements indicating a space of a specific size, and the determination unit may specify the unit element with which the tool comes into contact when the tool moves along the movement path, thereby determining the contact position. Thus, it is possible to simulate machining of the workpiece when the tool moves along the movement path, by using the target shape information representing the actual workpiece as the set of the unit elements, whereby the contact position between the tool and the workpiece can be accurately determined.

(14) A machining condition determination support system according to the present embodiment includes: the machining condition determination support device according to any one of the above (1) to (12); and a machine tool capable of communicating with the machining condition determination support device.

(15) A display device according to the present embodiment receives, from the machining condition determination support device according to any one of the above (1) to (12), support information including contact position information, and displays the received support information. The contact position information indicates temporal transition of a contact position between a tool and a workpiece when the tool moves along a movement path. Thus, it is possible to provide the user with the support information including the contact position information that allows determination as to how the contact position between the tool and the workpiece transitions with time when the tool moves along the movement path.

(16) A machining condition determination support method according to the present embodiment is a method for supporting determination of a machining condition for a machine tool that machines a workpiece with a tool. The method includes: based on target shape information indicating a shape of the workpiece, path information indicating a movement path of the tool, and tool shape information indicating a shape of the tool, determining a contact position between the tool and the workpiece when the tool moves along the movement path; and generating contact position information indicating temporal transition of the contact position when the tool moves along the movement path. Thus, it is possible to generate the contact position information that allows determination as to how the contact position between the tool and the workpiece transitions with time when the tool moves along the movement path.

(17) A machining condition determination support program according to the present embodiment is a program for supporting determination of a machining condition for a machine tool that machines a workpiece with a tool. The program causes a computer to execute: based on target shape information indicating a shape of the workpiece, path information indicating a movement path of the tool, and tool shape information indicating a shape of the tool, determining a contact position between the tool and the workpiece when the tool moves along the movement path; and generating contact position information indicating temporal transition of the contact position when the tool moves along the movement path. Thus, it is possible to generate the contact position information that allows determination as to how the contact position between the tool and the workpiece transitions with time when the tool moves along the movement path.

<Details of embodiment of the present disclosure>

Hereinafter, an embodiment of the present disclosure will be described in detail with reference to the drawings. At least some parts of the embodiment described below may be combined together as desired.

[1. Configuration of machining condition determination support system]

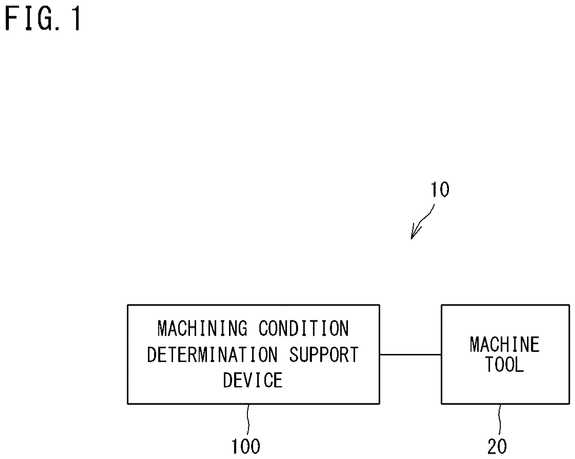

FIG. 1 shows an example of an overall configuration of a machining condition determination support system according to the embodiment. A machining condition determination support system 10 supports determination of machining conditions in a machine tool 20. The machine tool 20 machines a workpiece by using tools. The machine tool 20 is a rotating tool that performs rotating machining on the workpiece. The machine tool 20 is, for example, a milling tool.

The machining condition determination support system 10 includes the machine tool 20, and a machining condition determination support device 100. The machining condition determination support device 100 supports the user to determine machining conditions. The machining condition determination support device 100 is communicably connected to the machine tool 20. For example, the machining condition determination support device 100 can transmit, to the machine tool 20, information on the machining conditions determined by the user.

[2. Tools]

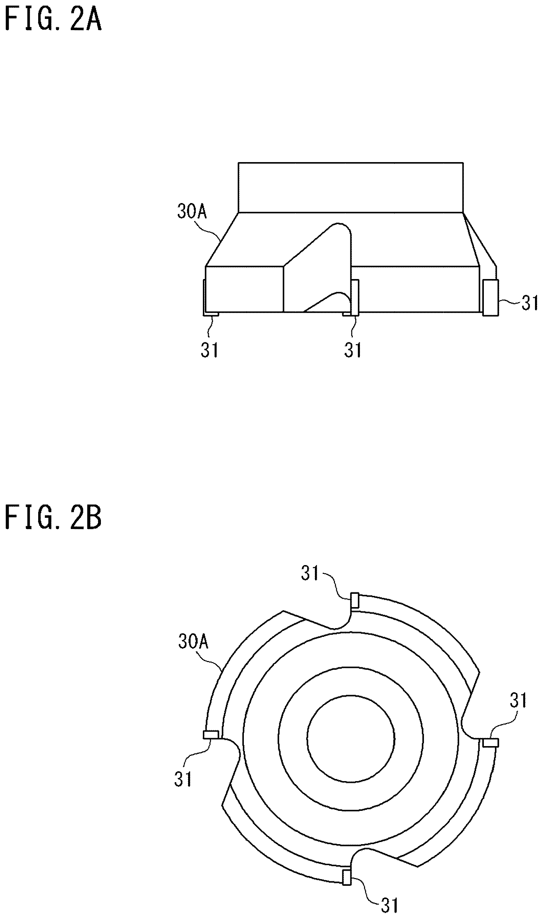

FIG. 2A and FIG. 2B show an example of a configuration of a tool according to the embodiment. FIG. 2A is a side view of a tool 30A, and FIG. 2B is a plan view of the tool 30A.

The tool 30A is a rotating tool, and is a milling cutter, for example. The tool 30A is mounted to the machine tool 20. The tool 30A has teeth 31. The tool 30A rotates while advancing straight, whereby the teeth 31 come into contact (interfere) with the workpiece, and cut the workpiece.

The tool 30A shown in FIG. 2A and FIG. 2B has four teeth.

When the tool 30A is a milling cutter, the main body of the tool 30A is formed of steel, and the teeth 31 are formed of hard metal. However, the tool 30A is not limited to a milling cutter. The tool 30A may be an end mill whose body and teeth 31 are integrally formed of hard metal.

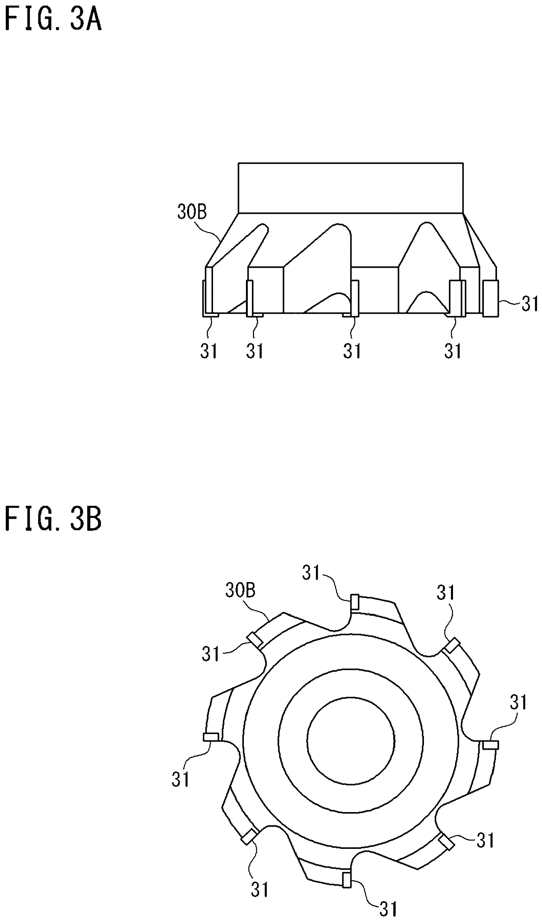

FIG. 3A and FIG. 3B show another example of the configuration of the tool according to the embodiment. FIG. 3A is a side view of a tool 30B, and FIG. 3B is a plan view of the tool 30B.

The tool 30B is a milling cutter having the same diameter as the tool 30A, and eight teeth. Thus, tools having various diameters and various numbers of teeth are used.

[3. Description of terms]

Hereinafter, terms used in the field of rotating machining will be described.

[3-1. Depth of cut]

An amount of cutting of the milling cutter corresponding to a distance between a work surface and a finished surface is referred to as a depth of cut. A depth of cut in the axial direction of the milling cutter is referred to as an axial depth of cut, and a depth of cut in the radial direction of the milling cutter is referred to as a radial depth of cut.

[3-2. Feed per tooth]

In milling machining, an amount of movement (amount of feed) of a tooth in a tool sending direction, after one tooth has passed a point until a next tooth reaches the same angle as this point, is referred to as a feed per tooth.

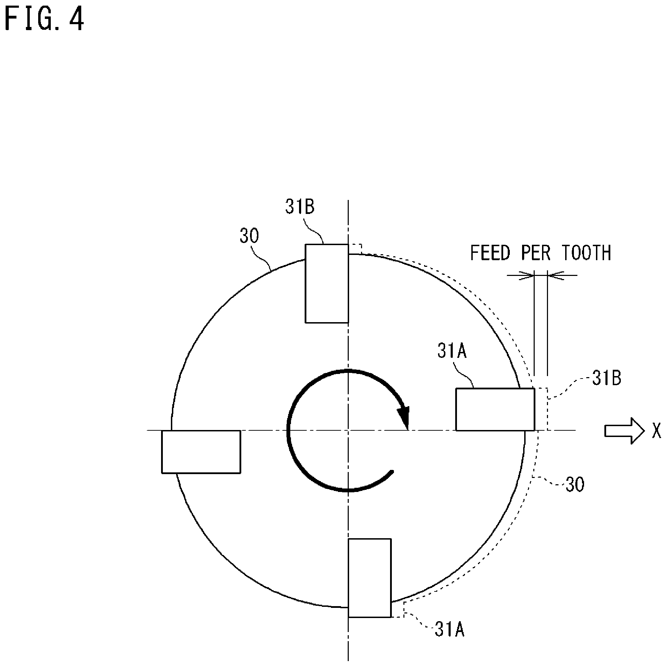

FIG. 4 illustrates a feed per tooth. FIG. 4 shows, as one example, a tool 30 having four teeth. It is assumed that an angle $\theta$ from a rotation center of the tool 30 to an advancing direction X (hereinafter also referred to as "tool angle") is 90°, a tool angle at a position where the rotation center is rotated 90° clockwise from the position where $\theta$=90° is 0°, and a tool angle at a position where the rotation center is rotated 90° counterclockwise from the position where $\theta$=90° is 180°. The tool 30 is in contact with the workpiece only at a half surface on the advancing direction side, i.e., only within a range of 0°≤$\theta$≤180°.

An amount (distance) by which the tool 30 advances from when a tooth 31A is at the position where the tool angle is 90° (indicated by a solid line in the figure) to when a tooth 31B reaches the position where the tool angle is 90° (i.e., the position where the tooth 31A is at the tool angle of 0°), is the feed per tooth of the tool 30.

A feed per tooth fz is expressed by the following formula (1), where the feed speed (moving speed) of the tool 30 is Vf, the rotation speed of the tool 30 is N, and the number of teeth of the tool 30 is k.

[Math 1]

$$f_z = \frac{V_f}{kN} \quad \cdot \cdot \cdot (1)$$

[3-3. Undeformed chip thickness]

In milling machining, when a major cutting edge is projected onto a plane perpendicular to the direction of a velocity vector of a primary motion or to the direction of a velocity vector of a resultant cutting motion (primary motion + feed motion), the thickness, of a portion to be cut, measured perpendicularly to the projected cutting edge is referred to as an undeformed chip thickness.

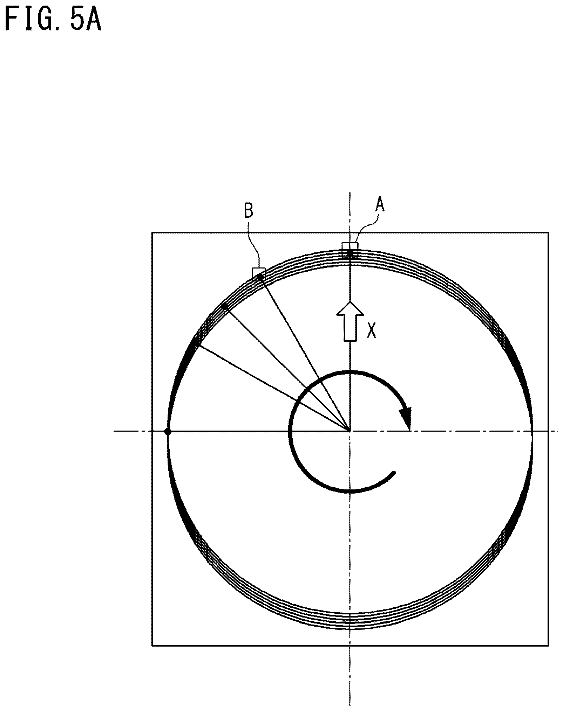

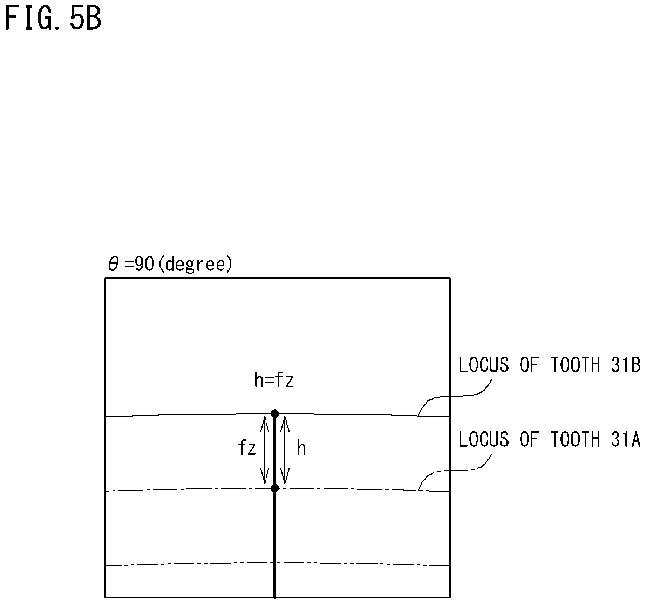

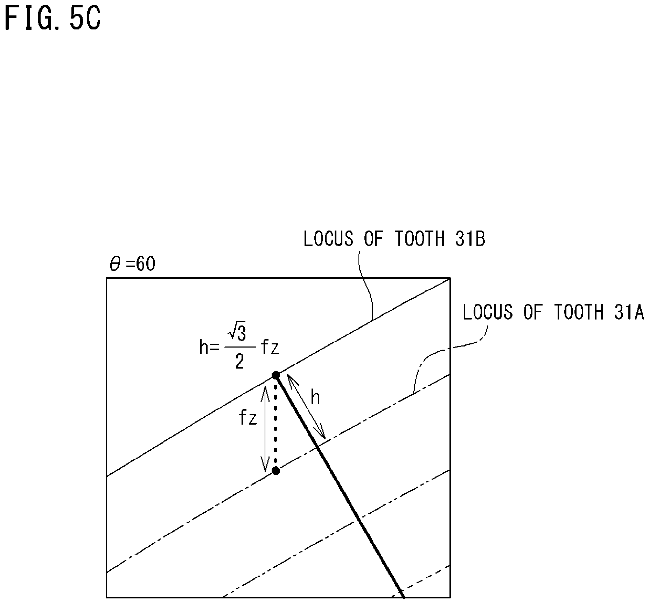

FIG. 5A, FIG. 5B, and FIG. 5C illustrate the undeformed chip thickness. Since the milling cutter advances while rotating, the motion locus of each tooth becomes a trochoid locus. Therefore, the undeformed chip thickness varies depending on the phase of the tooth. The undeformed chip thickness h is expressed by the following formula (2). [Math 2]

$$ h = f_z \sin \theta \quad \cdots (2) $$

FIG. 5A shows the movement loci of the edges of the plurality of teeth of the tool 30. FIG. 5B is an enlarged view of a part A in FIG. 5A, and shows the movement loci of the teeth at the tool angle $\theta$ of 90°. FIG. 5C is an enlarged view of a part B in FIG. 5A, and shows the movement loci of the teeth at the tool angle $\theta$ of 90°.

In FIG. 5B and FIG. 5C, the movement locus of the tooth 31A is indicated by an alternate long and short dash line, and the movement locus of the tooth 31B is indicated by a solid line. A portion, of the workpiece, to be cut by the tooth 31A is a portion between the movement locus of the tooth 31A and the movement locus of the tooth 31B.

As shown in FIG. 5B, at the position where $\theta$=90°, h=fz because sin$\theta$=1. That is, the undeformed chip thickness at $\theta$=90° corresponds to the feed per tooth fz.

As shown in FIG. 5C, at the position where $\theta$=60°, h=√3/2•fz because sin $\theta$=√3/2.

[3-4. Engage angle, disengage angle]

In milling machining, an angle at which an edge of a tooth of a tool is engaged with a workpiece is referred to as an engage angle. In milling machining, an angle at which the edge of the tooth of the tool is disengaged from a workpiece is referred to as a disengage angle.

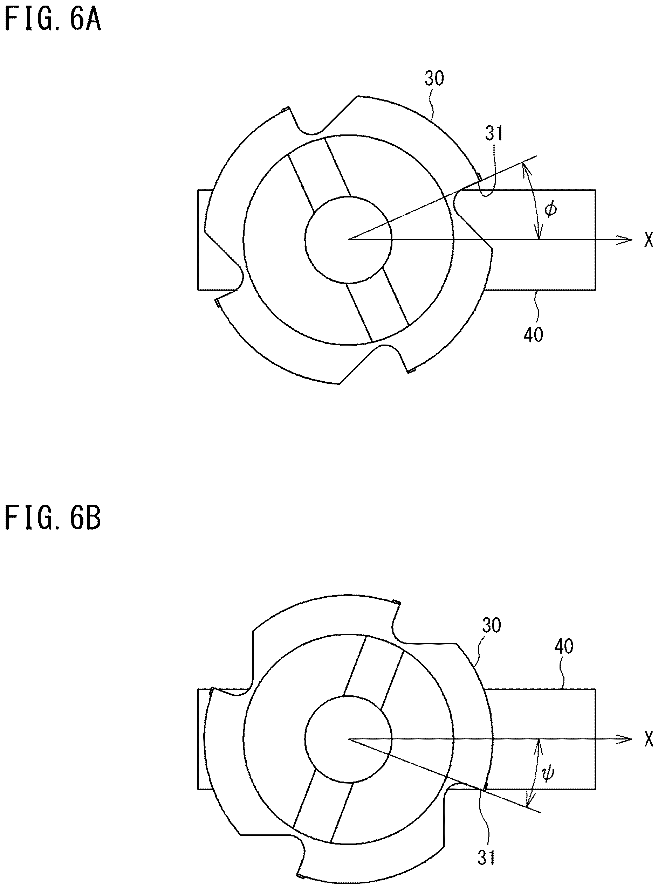

FIG. 6A illustrates an engage angle. In the case of face milling as shown in FIG. 6A, an angle formed between a line connecting the rotation center of the tool 30 and a contact point of the tooth 31 of the tool 30 and the workpiece 40 at the time of engagement, and the tool advancing direction X, is an engage angle $\varphi$.

FIG. 6B illustrates a disengage angle. In the case of face milling as shown in FIG. 6B, an angle formed between a line connecting the rotation center of the tool 30 and a contact point of the tooth 31 of the tool 30 and the workpiece 40 at the time of disengagement, and the tool advancing direction X, is a disengage angle $\psi$.

[3-5. Burr, chipping]

If a chip of a workpiece is not successfully removed and is extruded due to plastic deformation, an uncut portion is generated at an end of the workpiece, which is called a burr. Chipping is a chipped portion of a tooth. Chipping is called microchipping, chipping, fracture, and breakage depending on its size.

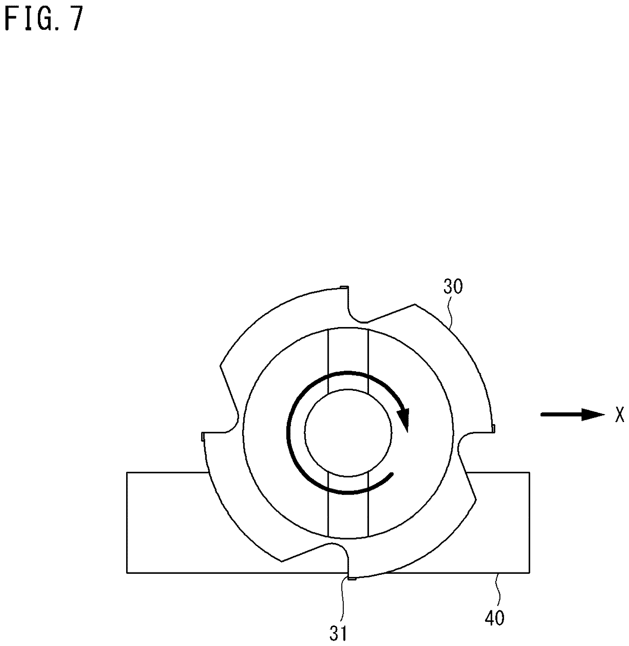

FIG. 7 illustrates a case in which a burr occurs. As shown in FIG. 7, when the tooth 31 is disengaged from the workpiece 40 at around an angle of $\theta$=0°, that is, when the disengage angle is about 90°, the undeformed chip thickness is small, and chips are not removed, which may cause a burr.

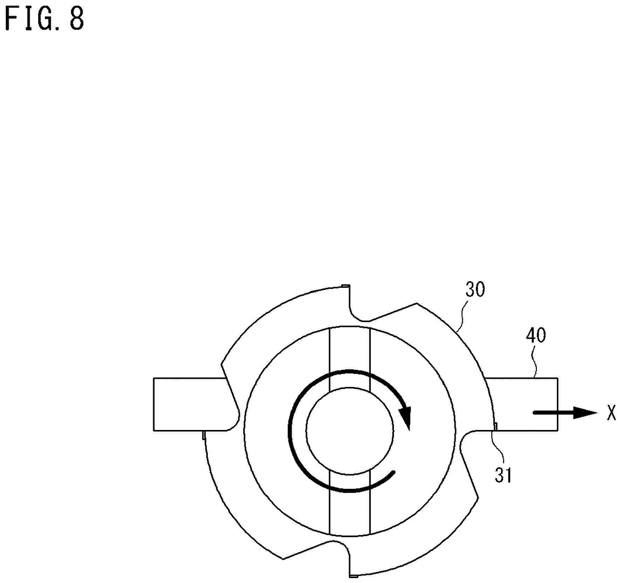

FIG. 8 illustrates a case in which chipping occurs. As shown in FIG. 8, when the tooth 31 is disengaged from the workpiece 40 at, for example, around an angle of $\theta$=0°, that is, when the disengage angle is about 0°, the undeformed chip thickness is large, and stress applied to the edge of the tooth is released all at once before and after the disengagement. As a result, tensile stress acts on the edge of the tooth, which may cause chipping.

That is, the larger the disengage angle is, the more a burr occurs. The smaller the disengage angle is, the more chipping occurs.

[4. Hardware configuration of machining condition determination support device]

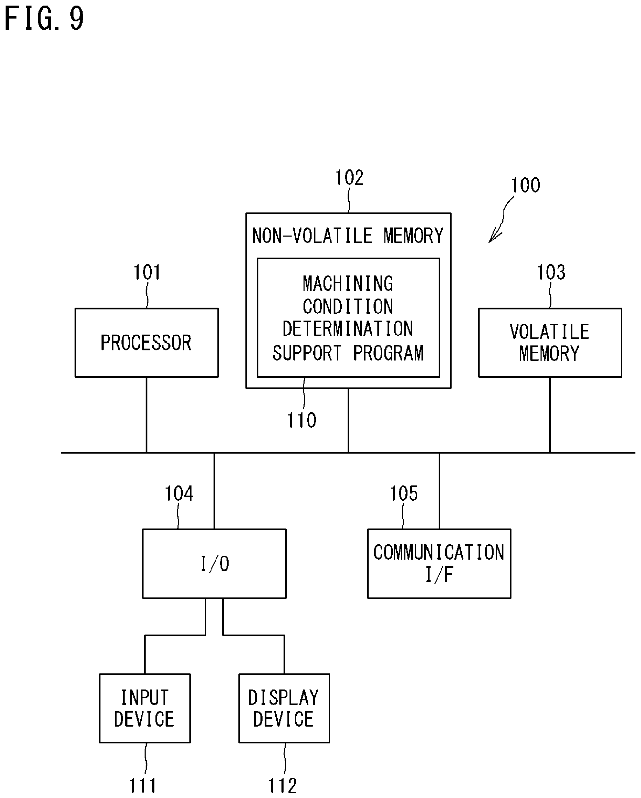

FIG. 9 is a block diagram showing an example of a hardware configuration of a machining condition determination support device according to the embodiment.

A machining condition determination support device 100 includes a processor 101, a non-volatile memory 102, a volatile memory 103, an input/output interface (I/O) 104, and a communication interface (communication I/F) 105.

The volatile memory 103 is a volatile memory such as an SRAM (Static Random Access Memory) or a DRAM (Dynamic Random Access Memory), for example. The non-volatile memory 102 is a non-volatile memory such as a flash memory or a ROM (Read Only Memory), for example. The non-volatile memory 102 has, stored therein, a machining condition determination support program 110 as a computer program, and data to be used for execution of the machining condition determination support program 110. Functions of the machining condition determination support device 100 are implemented by the machining condition determination support program 110 being executed by the processor 101. The machining condition determination support program 110 can be stored in a storage medium such as a flash memory, a ROM, or a CD-ROM.

The processor 101 is, for example, a CPU (Central Processing Unit). However the processor 101 is not limited to a CPU. The processor 101 may be a GPU (Graphics Processing Unit). In a specific example, the processor 101 is a multicore GPU. The processor 101 may be, for example, an ASIC (Application Specific Integrated Circuit), or may be a programmable logic device such as a gate array or an FPGA (Field Programmable Gate Array). In this case, the ASIC or the programmable logic device is configured to be able to execute the same process as that of the machining condition determination support program 110.

The I/O 104 is connected to an input device 111 and a display device 112.

For example, the input device 111 includes a keyboard and a pointing device such as a mouse. The input device 111 may be an electrostatic capacitance type touch pad or a pressure sensitive type touch pad superposed on a screen of the display device 112. The input device 111 is used for inputting data into the machining condition determination support device 100. The I/O 104 receives input data from the input device 111 and gives the received data to the processor 101.

The display device 112 includes, for example, a liquid crystal panel or an OEL (organic electroluminescence) panel. The display device 112 can display information of characters or figures. The I/O 104 controls the display on the display device 112. The I/O 104 includes a graphic controller. The graphic controller includes, for example, a GPU and a VRAM (Video RAM), holds, in the VRAM, data to be displayed on the display device 112, and periodically reads video data for one frame from the VRAM to generate a video signal. The generated video signal is outputted to the display device 112, and a video is displayed on the display device 112. The function of the graphic controller may be included in the processor 101. A certain area in the volatile memory 103 may be used as a VRAM.

The communication I/F 105 can communicate with an external device. The communication I/F 105 is, for example, connected to the machine tool 20 via a communication cable to be communicable with the machine tool 20. The communication I/F 105 may be a wireless communication interface.

[5. Functions of machining condition determination support device]

Generally, a tool is determined first for the shape of a workpiece, and then a movement path of the tool is determined. Since the tool and the movement path are separately determined, even if the workpiece is cut and machined along the determined movement path, a machining result does not always satisfy the requirement. If the machining result does not satisfy the requirement, the tool and the set conditions (the rotation speed, the feed speed, etc., of the tool) are reconsidered. However, since it is not easy to reset the movement path of the tool in the machine tool, the movement path is rarely changed.

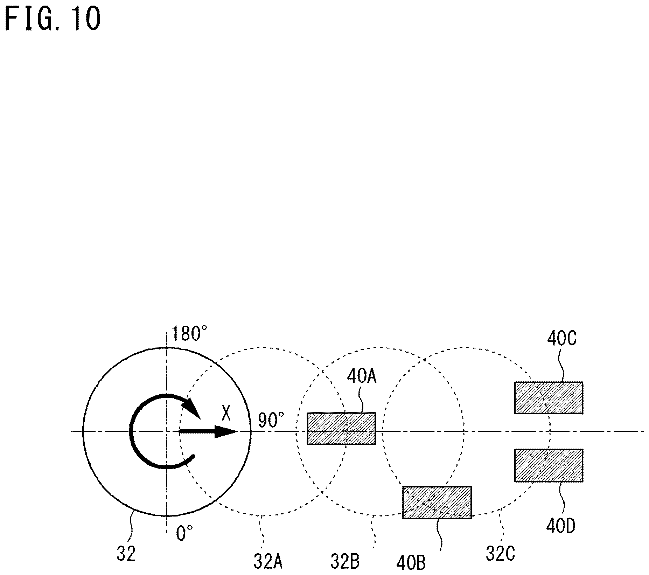

FIG. 10 illustrates the relationship between a relative position between a tool and a workpiece, and a load torque on the main spindle of the machine tool.

A workpiece 40A is located in front of the tool, i.e., on an axis extending in the advancing direction X from the rotation center of the tool (hereinafter also referred to as "center axis"). In FIG. 10, a reference sign 32 indicates an apparent rotation circle of the tool, that is, an outer diameter of the rotation path of the tool when it is assumed that the tool rotates without moving. When the tool is located at the rotation circle 32A, the tool is in contact with the workpiece 40A, and the workpiece 40A is cut. The workpiece 40A is in contact with the tool at the front side in the advancing direction X of the rotation circle 32A. That is, the tool and the workpiece 40A are in contact with each other at around $\theta=90°$.

A workpiece 40B has the same shape as the workpiece 40A. The workpiece 40B is located on the right side from the front of the tool, i.e., on the right side with respect to the center axis. When the tool is located at a rotation circle 32B, the tool is in contact with the workpiece 40B, and the workpiece 40B is cut. The workpiece 40B is in contact with the tool at the right end in the advancing direction X of the rotation circle 32B. That is, the tool and the workpiece 40B are in contact with each other at around $\theta=0°$.

The load torque that acts on the main spindle differs between machining of the workpiece 40A and machining of the workpiece 40B. The load torque in machining the workpiece 40B is smaller than the load torque in machining the workpiece 40A.

A workpiece 40C is located on the left side from the front of the tool, i.e., on the left side with respect to the center axis. A workpiece 40D is located on the right side from the front of the tool, i.e., on the right side with respect to the center axis. The workpieces 40C and 40D are located at line-symmetrical positions with respect to the center axis. That is, the distance from the center axis to the workpiece 40C is equal to the distance from the center axis to the workpiece 40D. When the tool is located at a rotation circle 32C, the tool is in contact with the workpieces 40C and 40D, and the workpieces 40C and 40D are cut. The workpiece 40C is in contact with the tool at the right side with respect to

The center axis in the advancing direction X of the rotation circle 32C, and the workpiece 40D is in contact with the tool at the left side with respect to the center axis in the advancing direction X of the rotation circle 32C. That is, the tool and the workpiece 40C are in contact with each other at around $\theta=110°$, and the tool and the workpiece 40D are in contact with each other at around $\theta=70°$.

For example, when the number of teeth of the tool is 1, the tooth comes into contact with the workpiece 40C and the workpiece 40D in this order. Meanwhile, when the tool has a plurality of teeth, the teeth may simultaneously come into contact with the workpieces 40C and 40D. This situation occurs when the interval between the teeth is equal to the interval between the workpieces 40C and 40D. The load torque that acts on the main spindle is greater in the case where the teeth simultaneously come into contact with the workpieces 40C and 40D than in the case where the teeth do not simultaneously come into contact with the workpieces 40C and 40D.

Conventionally, the movement path of a tool and the load that acts on the tool have not been simultaneously evaluated. Unless the movement path of the tool is known, it is not possible to determine what kind of load is applied to the tool at which part of a workpiece. Moreover, unless the movement path of the tool is known, it is not possible to grasp the relationship between the tool feeding direction and the position where the tool interferes with the workpiece, and therefore, it is not possible to determine likelihood of cutting phenomenon such as a burr or chipping caused by the undeformed chip thickness at the edge of the tooth. As described above, the load torque on the main spindle varies depending on the relative position between the tool and the workpiece and on the shape of the tool (including the number of teeth). Therefore, machining conditions can be efficiently determined if a movement path that prevents the load torque on the main spindle from becoming too great can be examined, and a tool whose teeth do not simultaneously come into contact with the workpiece can be selected. That is, it is preferable to simultaneously examine a tool and the movement path of the tool, and determine a combination of a tool and a movement path that are appropriate for the shape of the workpiece.

In view of the above circumstances, the machining condition determination support device 100 according to the embodiment provides a user with information for determining machining conditions including a combination of a tool and a movement path of the tool.

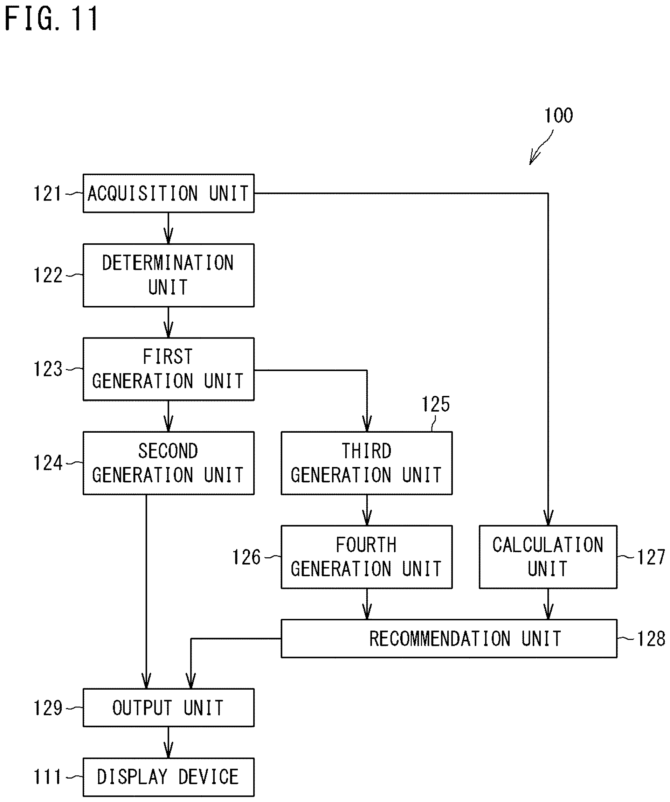

FIG. 11 is a functional block diagram showing an example of functions of the machining condition determination support device according to the embodiment. The machining condition determination support device 100 includes functions of an acquisition unit 121, a determination unit 122, a first generation unit 123, a second generation unit 124, a third generation unit 125, a fourth generation unit 126, a calculation unit 127, a recommendation unit 128, and an output unit 129. The processor 101 executes the machining condition determination support program 110 to realize the functions of the acquisition unit 121, the determination unit 122, the first generation unit 123, the second generation unit 124, the third generation unit 125, the fourth generation unit 126, the calculation unit 127, the recommendation unit 128, and the output unit 129.

The acquisition unit 121 acquires target shape information, path information, and tool shape information. For example, the machining condition determination support device 100 receives inputs of the target shape information, the path information, and the tool shape information from the user or another device.

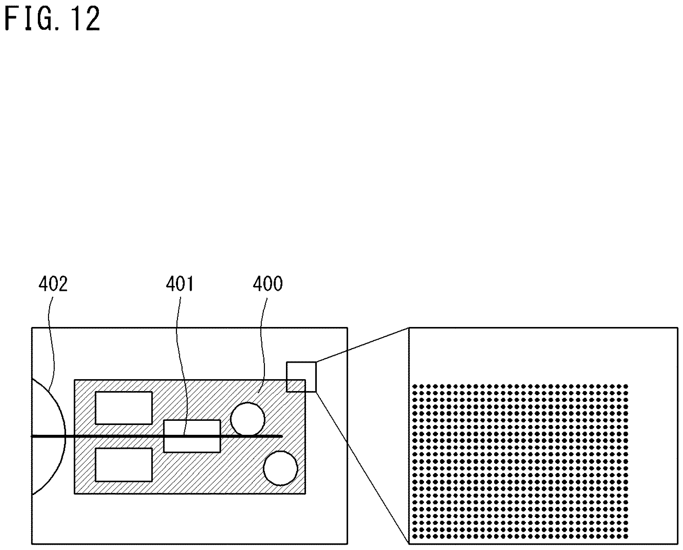

The target shape information is information indicating the shape of the workpiece. In a specific example, the target shape information is information expressing the shape of the workpiece as a set of unit elements indicating a space of a specific size. FIG. 12 illustrates an example of the target shape information. In the example shown in FIG. 12, target shape information 400 is an image indicating the planar shape of the workpiece. As shown in an enlarged part in FIG. 12, the target shape information 400 is a set of dots. One dot corresponds to a rectangle of a particular size, and is placed at the center of the rectangle. The interval between dots is large enough to express at least the shape of the workpiece. The smaller the interval between dots is, the more detailed the shape of the workpiece can be expressed, but the data size of the target shape information 400 and the calculation amount increase. In the example shown in FIG. 12, a dot is a unit element.

The acquisition unit 121 can receive the target shape information 400 having the above data structure from the user or an external device. The acquisition unit 121 may generate the target shape information 400. For example, the acquisition unit 121 may convert CAD (Computer-Aided Design) data inputted by the user or the external device into the target shape information 400.

The path information is information indicating the movement path of the tool. For example, the path information is added to the target shape information 400. In FIG. 12, path information 401 is indicated by a solid straight line. The path information 401 indicates the movement path of the rotation center of the tool.

The tool shape information is information indicating the shape of the tool. For example, the shape of the tool includes the tool diameter, i.e., the diameter of the rotation circle of the tool, and the number of teeth. In FIG. 12, a rotation circle 402 is indicated by a dashed-line circle. The tool shape information includes the rotation circle 402 and the number of teeth (not shown).

Based on the target shape information 400, the path information 401, and the tool shape information, the determination unit 122 determines a contact position between the tool and the workpiece when the tool moves along the movement path.

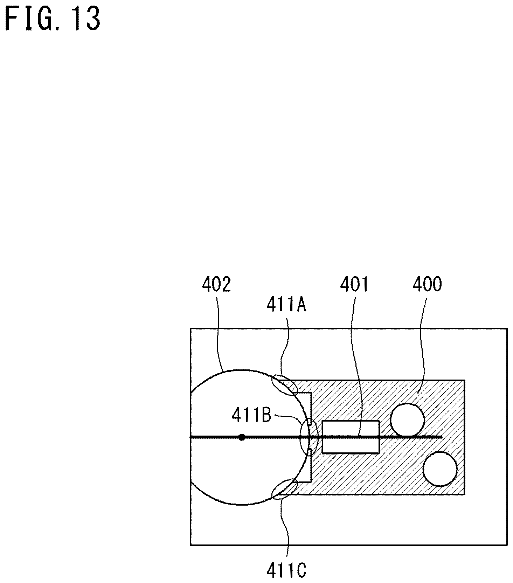

FIG. 13 illustrates an example of determining the contact position between the tool and the workpiece. The determination unit 122 moves the rotation circle 402 of the tool along the movement path, and determines, as a contact position, a position where the target shape information 400 and the rotation circle 402 overlap each other. In the example shown in FIG. 13, portions surrounded by ellipses indicate contact positions. When the tool is positioned at the rotation circle 402, the tool and the workpiece are in contact with each other at contact positions 411A, 411B, 411C.

In a specific example, when the tool moves along the movement path, the determination unit 122 specifies a dot with which the tool comes into contact, thereby determining a contact position. For example, the determination unit 122 moves the rotation circle 402 along the movement path, and specifies a dot that overlaps the rotation circle 402 at each tool position.

More specifically, the determination unit 122 determines the amount of movement (amount of feed) of the tool per unit time, based on the advancement speed (feed speed) of the tool that is determined based on the feed per tooth, and specifies the position of the rotation circle 402 when the tool is moved by the determined amount of movement. The determination unit 122 specifies a dot that overlaps the rotation circle 402 due to the movement of the rotation circle 402. However, determination of the amount of movement of the tool is not limited to that described above. The amount of movement of the tool may be arbitrarily determined as long as the contact position between the tool and the workpiece can be specified. For example, the amount of movement of the tool may be the amount of feed per rotation of the tool, or may be another amount of feed of the tool. If the amount of feed is at least larger than the interval between dots, it is possible to specify the contact position between the tool and the workpiece which transitions with time.

The determination unit 122 specifies the tool angle of the dot that overlaps the rotation circle 402. Thus, the determination unit 122 determines the contact position between the tool and the workpiece in the case where the tool advances by the amount of feed per unit time. The determination unit 122 deletes the dot that overlaps the rotation circle 402, and specifies the position of the next rotation circle 402. By repeating the above process, the determination unit 122 determines the contact position between the tool and the workpiece at each tool position.

The determination unit 122 determines the contact position between the tool and the workpiece for each number of teeth of the tool. If the feed speed of the tool is constant regardless of the number of teeth, the determination unit 122 specifies a dot that overlaps the rotation circle 402 in the case where the tool advances by the feed amount per unit time, and determines the contact position between the tool and the workpiece. If the feed per tooth is constant, the feed speed of the tool varies for each number of teeth. Therefore, the dot that overlaps the rotation circle 402 in the case where the tool advances by the feed amount per unit time also varies for each number of teeth. The determination unit 122 sequentially changes the number of teeth of the tool, and determines, for each number of teeth, the contact position between the tool and the workpiece.

Referring back to FIG. 11, the first generation unit 123 generates contact position information. The contact position information is information indicating temporal transition of the contact position when the tool moves along the movement path.

In a specific example, the first generation unit 123 arranges, in time order, the contact positions determined by the determination unit 122 to generate contact position information.

The contact position information is, for example, a graph including a first axis that indicates a position at which the tool is in contact with the workpiece in the apparent rotation circle of the tool, and a second axis that indicates the position of the tool in the advancing direction X. The second axis may be the time axis.

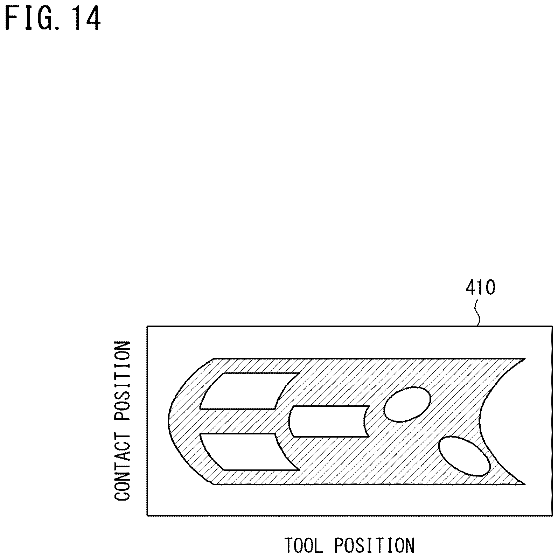

FIG. 14 is a graph showing an example of the contact position information. In FIG. 14, the vertical axis (first axis) indicates the contact position between the tool and the workpiece, and the horizontal axis (second axis) indicates the position of the tool in the advancing direction X. The contact position information 410 shown in FIG. 14 is generated based on the target shape information 400, the path information 401, and the rotation circle 402 shown in FIG. 12. If the movement path is a straight line, a part of a semicircle (a part corresponding to $0° \leq \theta \leq 180°$), on the advancing direction X side, of the rotation circle 402 comes into contact with the workpiece. The position of the rotation circle 402 at the tool angle of 90° first reaches the plane perpendicular to the advancing direction X. As the tool angle approaches 0° from 90° or the tool angle approaches 180° from 90°, it takes a longer time to reach the plane. Therefore, the contact position information 410 is represented as a shape in which the workpiece is deformed in an arc shape.

As described above, the relationship between the contact position between the tool and the workpiece, and the time varies depending on the number of teeth. The first generation unit 123 generates the contact position information 410 for each number of teeth.

Referring back to FIG. 11, the second generation unit 124 generates cut depth information, based on the contact position information 410 generated by the first generation unit 123. The cut depth information is information indicating temporal transition of the radial depth of cut of the tool with respect to the workpiece.

In the graph being the contact position information 410, the integral of the contact position in the feed amount for one rotation of the tool corresponds to the radial depth of cut. That is, when the contact position between the rotation circle 402 of the tool and the workpiece is projected onto a line perpendicular to the advancing direction X, the sum of the widths of projected contact positions on the line corresponds to the radial depth of cut. For example, the second generation unit 124 calculates, from the contact position information 410, the radial depth of cut at each tool position, thereby generating the cut depth information.

The cut depth information is, for example, a graph including a first axis that indicates the radial depth of cut of the tool, and a second axis that indicates the position of the tool in the advancing direction X. The second axis may be the time axis.

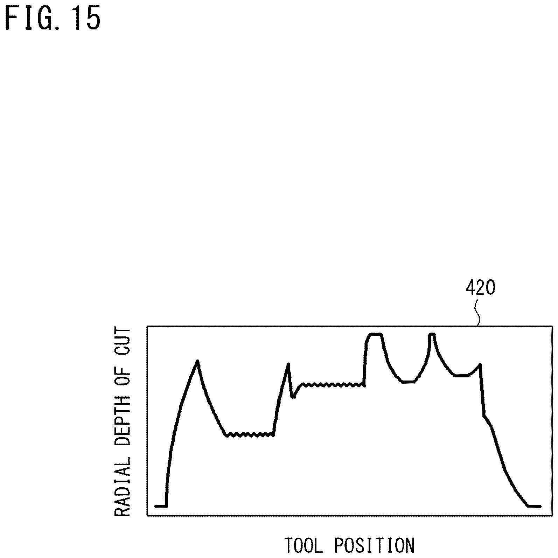

FIG. 15 is a graph showing an example of the cut depth information. In FIG. 15, the vertical axis (first axis) indicates the radial depth of cut of the tool, and the horizontal axis (second axis) indicates the position of the tool in the advancing direction X. The cut depth information 420 shown in FIG. 15 is generated based on the contact position information 410 shown in FIG. 14. The second generation unit 124 calculates, as the depth of cut, the sum of the contact positions for each position of the tool in the advancing direction X, and arranges the calculated depths of cut in the order of the tool positions in the advancing direction X, thereby generating the cut depth information 420.

Referring back to FIG. 11, the third generation unit 125 generates undeformed chip thickness information, based on the contact position information 410 generated by the first generation unit 123. The undeformed chip thickness information is information indicating temporal transition of the undeformed chip thickness for each number of teeth when the number of teeth of the tool is changed.

The undeformed chip thickness information is a graph including a first axis that indicates the sum of the undeformed chip thicknesses for each number of teeth, and a second axis that indicates the position of the tool in the advancing direction X. The second axis may be the time axis.

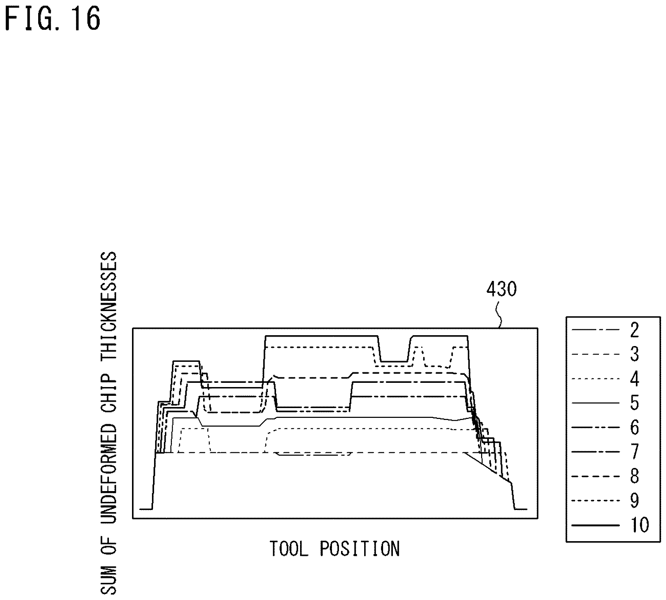

FIG. 16 is a graph showing an example of the undeformed chip thickness information. In FIG. 16, the vertical axis (first axis) indicates the sum of the undeformed chip thicknesses, and the horizontal axis (second axis) indicates the position of the tool in the advancing direction X. In FIG. 16, the line type of the graph is changed for each number of teeth.

The undeformed chip thickness h is calculated by formula (2) described above. Depending on the number of teeth of the tool, the pitch of teeth (the central angle between two adjacent teeth) varies. If a plurality of teeth are simultaneously in contact with the workpiece, the workpiece is simultaneously cut by the respective teeth in contact with the workpiece. Hereinafter, the number of teeth simultaneously in contact with the workpiece is also referred to as "the number of contacting teeth". The third generation unit 125 determines, for each tool position, whether or not the plurality of teeth are simultaneously in contact with the workpiece, and calculates the sum of the undeformed chip thicknesses by the respective teeth, for a time period in which the teeth are simultaneously in contact with the workpiece.

The inventors of the present application conducted an evaluation test regarding the influence of the number of teeth on the undeformed chip thickness. Hereinafter, the evaluation test will be described.

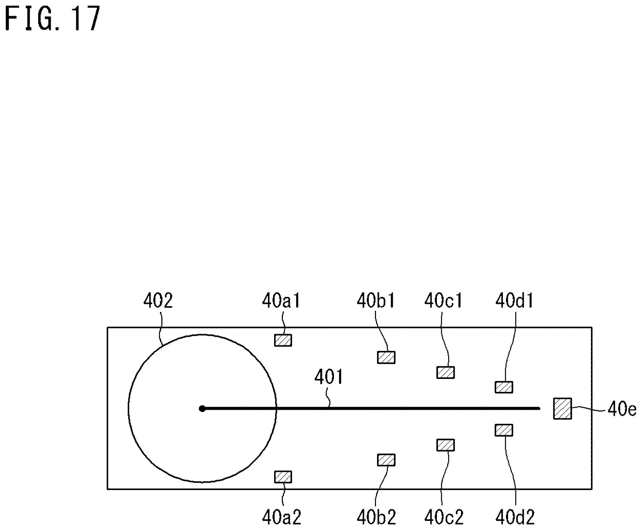

FIG. 17 illustrates the evaluation test regarding the influence of the number of teeth on the undeformed chip thickness. In the evaluation test, workpieces were placed at a plurality of positions, and a workpiece cutting process was simulated while changing the number of teeth. The movement path of the tool was linear. A plurality of pairs of workpieces were line-symmetrically arranged with respect to a straight line extending in the advancing direction X, and the interval between the pair of workpieces was changed at each position in the X direction. Specifically, X=0 was the initial position of the rotation center of the tool, a pair of workpieces 40a1, 40a2 were arranged at a position near X=25 mm, a pair of workpieces 40b1, 40b2 were arranged at a position near X=60 mm, a pair of workpieces 40c1, 40c2 were arranged at a position near X=80 mm, a pair of workpieces 40d1, 40d2 was arranged at a position near X=100 mm, and a workpiece 40e was arranged at a position near X=120 mm. The workpieces 40a1, 40a2, 40b1, 40b2, 40c1, 40c2, 40d1, 40d2 have the same shape and the same size. The workpiece 40e has a shape and a size obtained by combining two workpieces 40a1.

In the evaluation test, the workpiece cutting process was simulated for each of the cases where the number of teeth was 1, 2, 3, 4, 5, 6, 7, 8, 9, and 10. For each number of teeth, the undeformed chip thickness of each tooth was calculated, and when a plurality of teeth were simultaneously in contact with the workpiece, the sum of the undeformed chip thicknesses of the respective teeth was calculated.

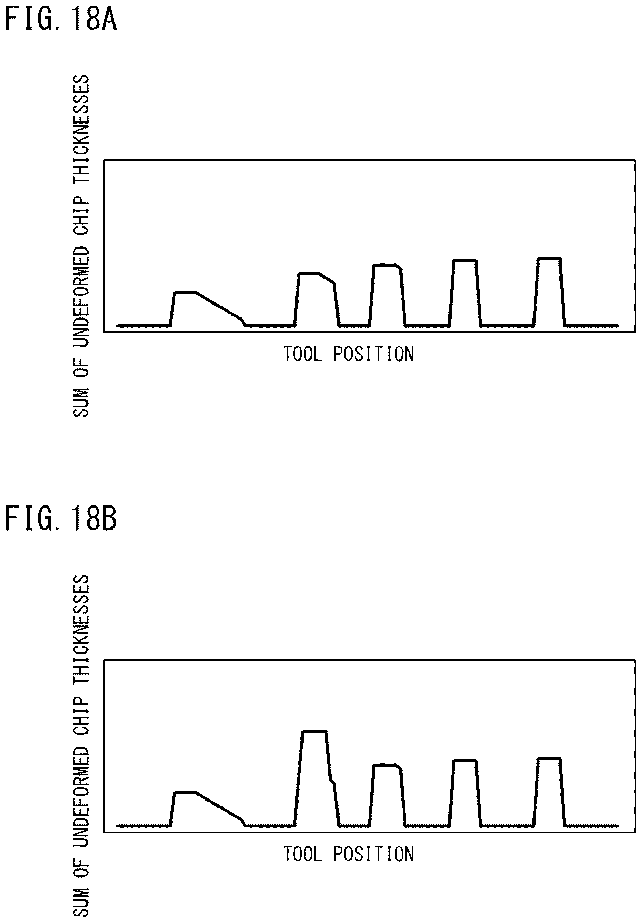

FIG. 18A shows an evaluation result in the case where the number of teeth is 2. As for the pair of workpieces 40a1, 40a2 having a wide interval, the sum of the undeformed chip thicknesses is small and increases as the interval decreases. The workpiece 40e has the maximum undeformed chip thickness. This is because the undeformed chip thickness varies depending on the phase of the tooth. Since this result is substantially the same as that in the case where the number of teeth is 1, it is conceivable that, when the number of teeth is 2, the two teeth are not simultaneously in contact with the workpiece.

FIG. 18B shows an evaluation result in the case where the number of teeth is 4. The undeformed chip thickness when the workpieces 40b1, 40b2 are in contact with the teeth is remarkably large. This is because a plurality of (two) teeth are simultaneously in contact with the workpieces 40b1, 40b2. Thus, when the plurality of teeth are simultaneously in contact with the workpieces, the sum of undeformed chip thicknesses increases, and the load torque on the main spindle increases.

Specifically, based on the contact position information 410 and the pitch of the teeth, the third generation unit 125 specifies: the maximum number of teeth that are simultaneously in contact with the workpiece at an observed tool position (or observed time); and the positions at which the teeth are in contact with the workpiece. For example, the third generation unit 125 assumes a straight line that passes the observed tool position and is perpendicular to the advancing direction X in the graph shown in FIG. 14, and disposes virtual teeth on the straight line. The virtual teeth are disposed at a tooth pitch that is obtained by 360° ÷ the number of teeth. The third generation unit 125 shifts the virtual teeth on the straight line, calculates the undeformed chip thickness at the position of each tooth, and calculates the sum of the undeformed chip thicknesses of the respective teeth. The third generation unit 125 plots the maximum value of the sum of the undeformed chip thicknesses at the corresponding tool position, and repeats the same process while shifting the tool position, thereby generating undeformed chip thickness information 430 shown in FIG. 16.

Referring back to FIG. 11, the fourth generation unit 126 generates representative value information, based on the undeformed chip thickness information 430 generated by the third generation unit 125. The representative value information is information indicating a representative value of the undeformed chip thickness for each number of teeth.

The representative value includes at least a maximum value. However, the representative value may include another value. The representative value may include a mean value, a median value, or a minimum value.

The representative value information is, for example, a graph including a first axis that indicates the representative value of the undeformed chip thickness, and a second axis that indicates the number of teeth.

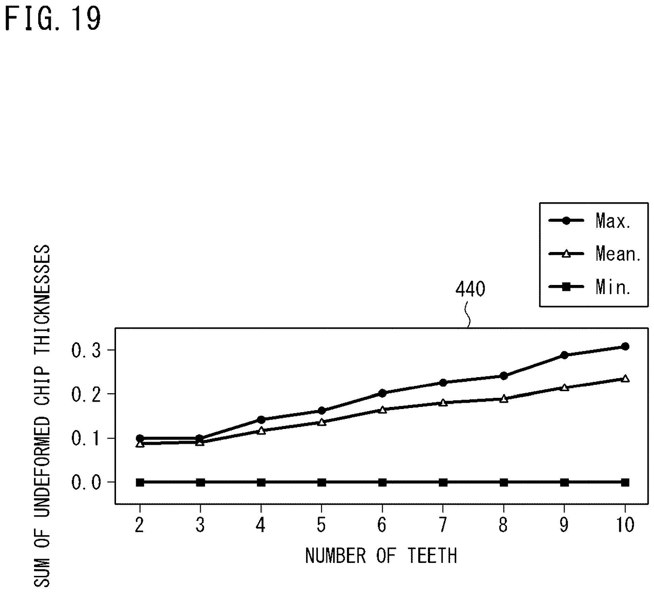

FIG. 19 is a graph showing an example of the representative value information. In FIG. 19, the vertical axis (first axis) indicates the undeformed chip thickness, and the horizontal axis (second axis) indicates the number of teeth of the tool.

For example, the fourth generation unit 126 selects a certain number of teeth of the tool, and specifies, in the undeformed chip thickness information 430, the maximum value, the minimum value, and the mean value of the undeformed chip thickness regarding the selected number of teeth. The fourth generation unit 126 plots the specified maximum value, minimum value, and mean value of the undeformed chip thickness at the position corresponding to the selected number of teeth. The fourth generation unit 126 performs the same process for the respective numbers of teeth, thereby generating representative value information 440.

Referring back to FIG. 11, based on the path information 401 and the number of teeth of the tool, the calculation unit 127 calculates the machining time of the workpiece by the tool for each number of teeth. The machining time P is expressed by the following formula (3), where D is the movement distance of the tool (movement path length), k is the number of teeth of the tool, fz is the feed per tooth, and N is the number of rotations of the tool.

[Math 3]

$$P = D \div (k \times f_z \times N \div 60) \quad \cdot \cdot \cdot (3)$$

The calculation unit 127 generates machining time information indicating the calculated machining time for each number of teeth. The machining time information is, for example, a graph including a first axis that indicates the machining time, and a second axis that indicates the number of teeth.

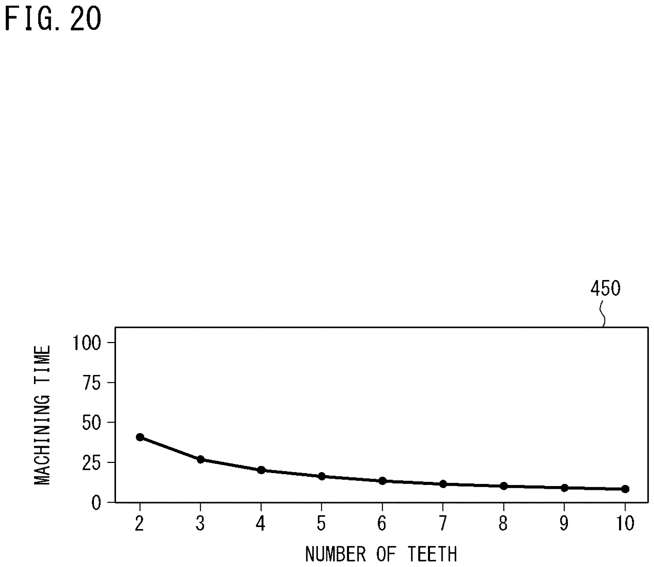

FIG. 20 is a graph showing an example of the machining time information. In FIG. 20, the vertical axis (first axis) indicates the machining time, and the horizontal axis (second axis) indicates the number of teeth of the tool.

The feed per tooth is set to a constant value, for example. The machining time varies depending on the number of teeth k as shown in the above formula (3). In machining time information 450, the machining time becomes shorter as the number of teeth increases.

Referring back to FIG. 11, the recommendation unit 128 determines the recommended number of teeth, based on the representative value information generated by the fourth generation unit 126, and the machining time for each number of teeth that is calculated by the calculation unit 127. The recommended number of teeth is the number of teeth of the tool recommended for workpiece machining.

In a specific example, the recommendation unit 128 can determine, as the recommended number of teeth, the number of teeth for which the representative value of the undeformed chip thickness is less than or equal to a first threshold value and the machining time is shorter than or equal to a second threshold value. For example, the recommendation unit 128 executes a first comparison process of comparing the representative value of the undeformed chip thickness with the first threshold value, and a second comparison process of comparing the machining time with the second threshold value. The recommendation unit 128 can determine the recommended number of teeth, based on the result of the first comparison process and the result of the second comparison process.

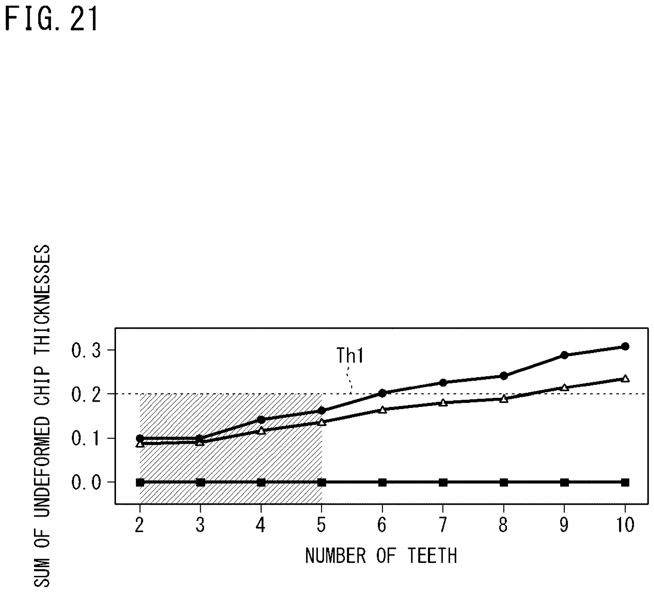

FIG. 21 illustrates the first comparison process. The recommendation unit 128 compares the representative value of the undeformed chip thickness for each number of teeth in the representative value information 440, with the first threshold value. The first threshold value is an upper-limit value of an allowable range of the undeformed chip thickness. Therefore, the representative value of the undeformed chip thickness is requested to be less than or equal to the first threshold value. Hereinafter, the request for the undeformed chip thickness is also referred to as "first request".

In the example shown in FIG. 21, the number of teeth = 2, 3, 4, 5 satisfies the first request. The representative value of the undeformed chip thickness may be the maximum value of the undeformed chip thickness.

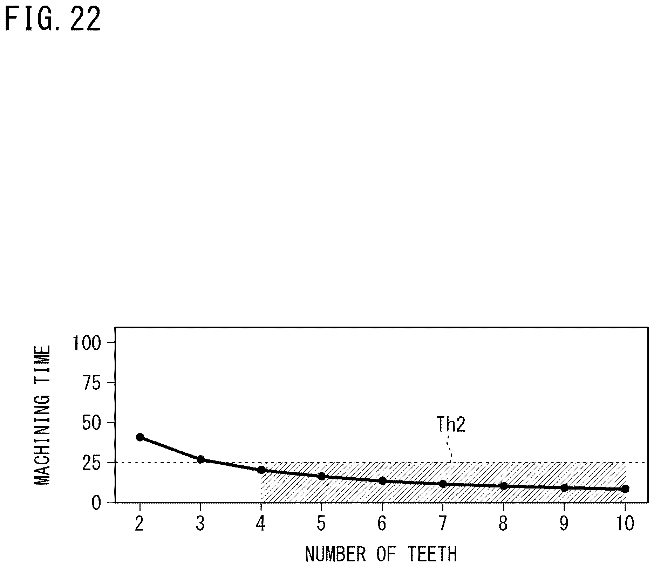

FIG. 22 illustrates the second comparison process. The recommendation unit 128 compares the machining time for each number of teeth in the machining time information 450, with the second threshold value. The second threshold value is an upper-limit value of an allowable range of the machining time. Therefore, the machining time is requested to be shorter than or equal to the second threshold value. Hereinafter, the request for the machining time is also referred to as "second request". In the example shown in FIG. 22, the number of teeth = 4, 5, 6, 7, 8, 9, 10 satisfies the second request.

The recommendation unit 128 determines the number of teeth that satisfies the first request and the second request, as the recommended number of teeth. In the examples shown in FIG. 21 and FIG. 22, the recommended numbers of teeth are 4 and 5.

Referring back to FIG. 11, the output unit 129 outputs support information to the display device 112. The support information includes at least contact position information 410 generated by the first generation unit 123. The display device 112 displays the support information. The display device 112 is an example of "display unit".

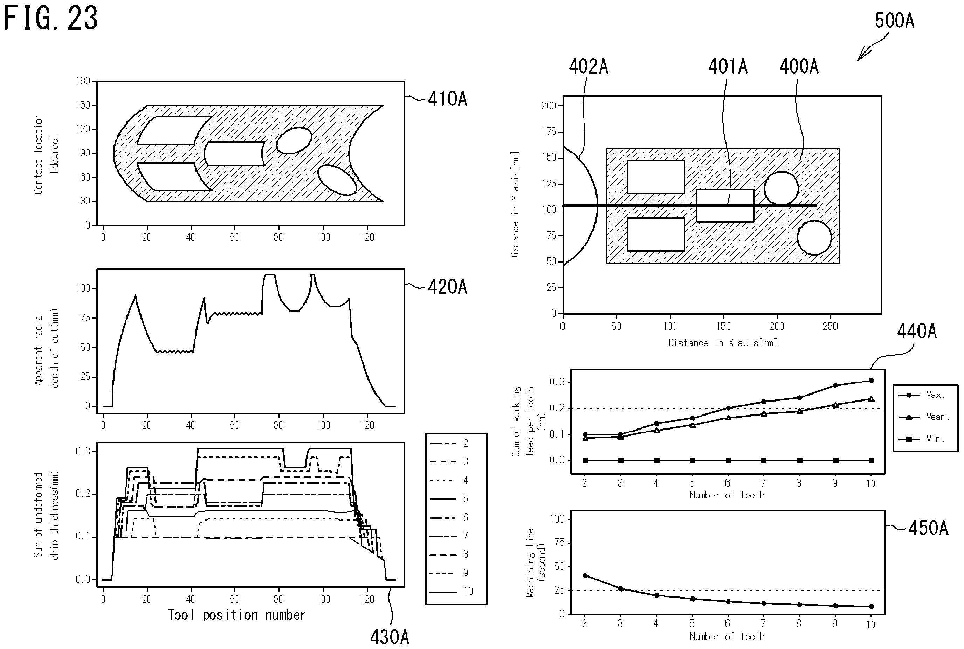

FIG. 23 shows a first display example of the support information on the display device. FIG. 23 shows support information 500A in the case where the movement path of the tool is linear. In the display example shown in FIG. 23, the support information 500A includes contact position information 410A, cut depth information 420A, and undeformed chip thickness information 430A.

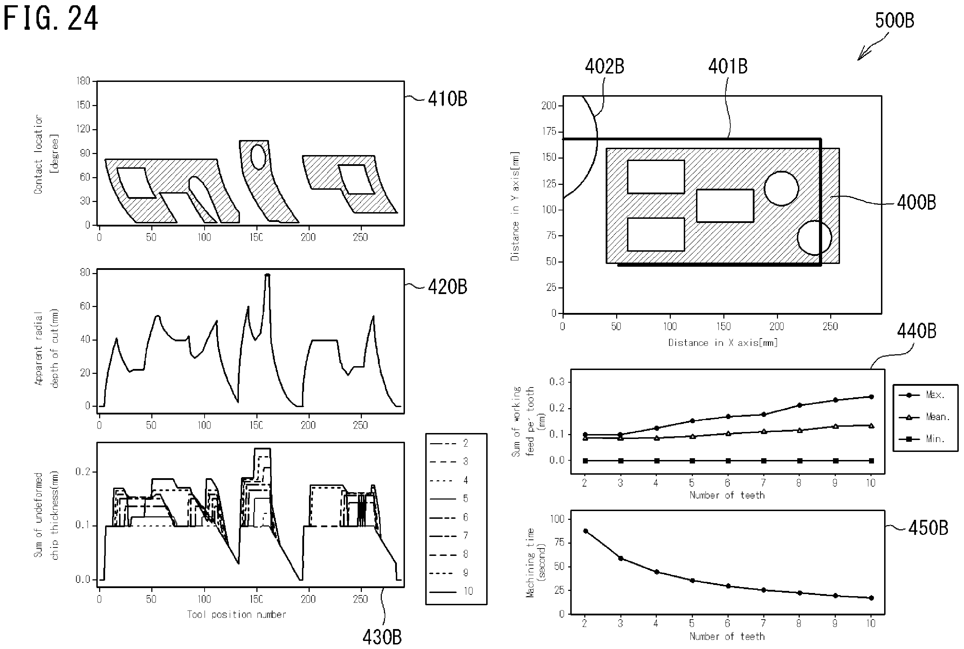

FIG. 24 shows a second display example of the support information on the display device. FIG. 24 shows support information 500B in the case where the movement path of the tool is bent twice at right angles. In the display example shown in FIG. 24, the support information 500B includes contact position information 410B, cut depth information 420B, and undeformed chip thickness information 430B.

The contact position information 410A, 410B allows the user to verify the engage angle and the disengage angle of the tool. For example, if there is a contact position where the disengage angle is near 0°, the user can judge that a burr is highly likely to occur. If there is a contact position where the disengage angle is near 90°, the user can judge that chipping is highly likely to occur. Thus, the user can judge whether the movement path is good or bad.

The cut depth information 420A, 420B allows the user to visually grasp temporal transition of the depth of cut. If the depth of cut is too large, vibration may occur during cutting. If the depth of cut is too small, the edge of the tooth may slide or scrape the surface of the workpiece. The cut depth information 420 allows the user to judge whether or not the depth of cut is appropriate.

The undeformed chip thickness information 430A, 430B allows the user to grasp temporal transition of the undeformed chip thickness for each number of teeth. Therefore, the user can judge, for example, a portion of the workpiece at which the undeformed chip thickness increases.

The support information 500A, 500B may further include at least one of representative value information and machining time information. In the example shown in FIG. 23, the support information 500A includes representative value information 440A and machining time information 450A. In the example shown in FIG. 24, the support information 500B includes representative value information 440B and machining time information 450B.

The representative value information 440A, 440B allows the user to grasp the representative value of the undeformed chip thickness for each number of teeth. For example, based on the maximum value of the undeformed chip thickness, the user can judge the number of teeth at which the load torque applied to the main spindle falls within an appropriate range.

The machining time information 450A, 450B allows the user to grasp the machining time for each number of teeth. The user can judge the number of teeth at which the machining time falls within an appropriate range.

The support information 500A, 500B may include the recommended number of teeth. Thus, the user can grasp the number of teeth recommended for the movement path.

The support information 500A, 500B may include target shape information 400 and path information 401. In the example shown in FIG. 23, the support information 500A includes target shape information 400A and path information 401A. In the example shown in FIG. 24, the support information 500B includes target shape information 400B and path information 401B. The target shape information 400A, 400B allows the user to grasp the shape of the workpiece. The path information 401A allows the user to grasp that the movement path of the tool is linear, and the path information 401B allows the user to grasp that the movement path of the tool is bent at two points.

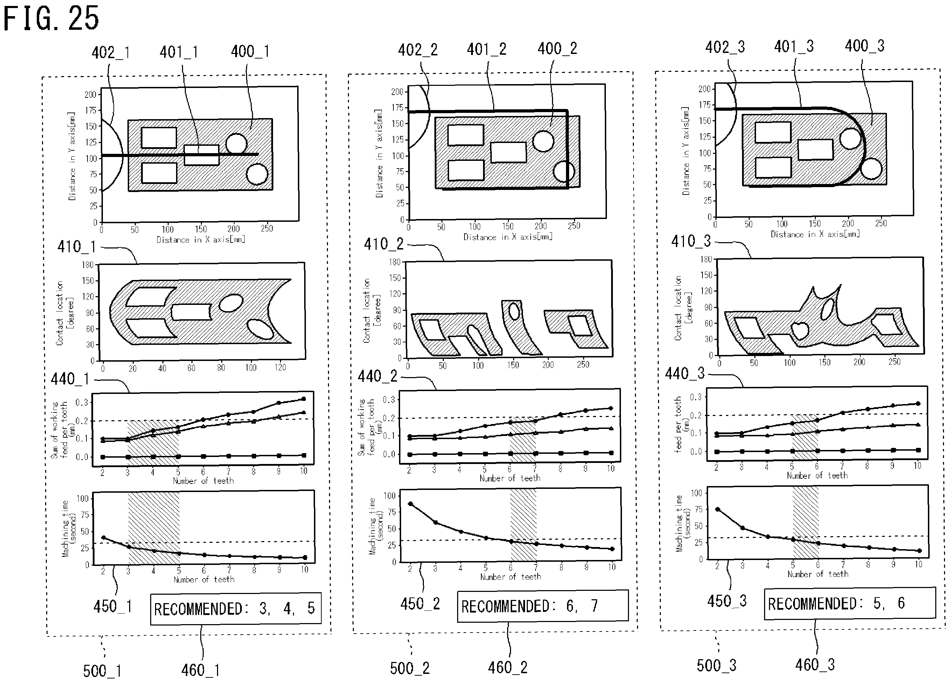

FIG. 25 shows a third display example of the support information on the display device. As shown in FIG. 25, the output unit 129 may cause the display device to simultaneously display a plurality of support information 500_1, 500_2, 500_3.

FIG. 25 shows an example in which the first support information 500_1, the second support information 500_2, and the third support information 500_3 are simultaneously displayed on the display device.

The first support information 500_1 is support information generated based on first target shape information 400_1, first path information 401_1, and first tool shape information. The first path information 401_1 is path information indicating a first movement path that is linear.

The first support information 500_1 includes the first target shape information 400_1, the first path information 401_1, and a first rotation circle 402_1.

The first target shape information 400_1 is information indicating the shape of a first workpiece. The first rotation circle 402_1 is an apparent rotation circle of a first tool.

The first support information 500_1 includes first contact position information 410_1. The first contact position information 410_1 is contact position information generated based on the first target shape information 400_1, the first path information 401_1, and the first rotation circle 402_1.

The first support information 500_1 includes first representative value information 440_1. The first representative value information 440_1 is information indicating the representative value of the undeformed chip thickness calculated based on the first target shape information 400_1, the first path information 401_1, and the first tool shape information. The first tool shape information is information including the first rotation circle 402_1 and the number of teeth of the first tool.

The first support information 500_1 includes first machining time information 450_1. The first machining time information 450_1 is information indicating, for each number of teeth, the machining time calculated based on the first target shape information 400_1, the first path information 401_1, and the first tool shape information.

The second support information 500_2 is support information generated based on second target shape information 400_2, second path information 401_2, and second tool shape information. The second path information 401_2 is path information indicating a second movement path that is bent at 90° at two points.

The second support information 500_2 includes the second target shape information 400_2, the second path information 401_2, and a second rotation circle 402_2. In this example, the second target shape information 400_2 and the second rotation circle 402_2 are identical to the first target shape information 400_1 and the first rotation circle 402_1, respectively.

The second support information 500_2 includes second contact position information 410_2. The second contact position information 410_2 is contact position information generated based on the second target shape information 400_2, the second path information 401_2, and the second rotation circle 402_2.

The second support information 500_2 includes second representative value information 440_2. The second representative value information 440_2 is information indicating the representative value of the undeformed chip thickness calculated based on the second target shape information 400_2, the second path information 401_2, and the second tool shape information. The second tool shape information is information including the second rotation circle 402_2 and the number of teeth of the second tool. The number of teeth of the second tool is equal to the number of teeth of the first tool.

The second support information 500_2 includes second machining time information 450_2. The second machining time information 450_2 is information indicating, for each number of teeth, the machining time calculated based on the second target shape information 400_2, the second path information 401_2, and the second tool shape information.

The third support information 500_3 is support information generated based on third target shape information 400_3, third path information 401_3, and third tool shape information. The third path information 401_3 is path information indicating a third movement path that is curved in a U shape.

The third support information 500_3 includes the third target shape information 400_3, the third path information 401_3, and a third rotation circle 402_3. In this example, the third target shape information 400_3 and the third rotation circle 402_3 are identical to the first target shape information 400_1 and the first rotation circle 402_1, respectively.

The third support information 500_3 includes third contact position information 410_3. The third contact position information 410_3 is contact position information generated based on the third target shape information 400_3, the third path information 401_3, and the third rotation circle 402_3.

The third support information 500_3 includes third representative value information 440_3. The third representative value information 440_3 is information indicating the representative value of the undeformed chip thickness calculated based on the third target shape information 400_3, the third path information 401_3, and the third tool shape information. The third tool shape information is information including the third rotation circle 402_3 and the number of teeth of a third tool. The number of teeth of the third tool is equal to the number of teeth of the first tool.

The third support information 500_3 includes third machining time information 450_3. The third machining time information 450_3 is information indicating, for each number of teeth, the machining time calculated based on the third target shape information 400_3, the third path information 401_3, and the third tool shape information.

As described above, the first support information 500_1, the second support information 500_2, and the third support information 500_3 being simultaneously displayed allows the user to judge what kind of load will be applied to the tool at which part of the workpiece, in the case where at least one of the shape of the workpiece, the movement path of the tool, and the shape of the tool is changed. Specifically, the user can judge which one of the first movement path, the second movement path, and the third movement path is suitable for machining of the workpiece by comparing the first support information 500_1, the second support information 500_2, and the third support information 500_3 with each other.

The user can determine the machining conditions including the shape of the workpiece, the movement path of the tool, and the shape of the tool, by using the support information displayed on the display device 112. For example, the user can adopt the machining conditions that are the basis of the support information displayed on the display device 112. In a specific example, the user can input adoption information, which indicates adoption of the machining conditions that are the basis of the support information displayed on the display device 112, into the machining condition determination support device 100 by using the input device 111. For example, in the example shown in FIG. 25, when the user has determined to adopt the machining condition corresponding to one of the first support information 500_1, the second support information 500_2, and the third support information 500_3, the user inputs the adoption information indicating adoption of the machining condition, into the machining condition determination support device 100. The user can specify the number of teeth of the tool, and can include the specified number of teeth into the adoption information.

When the adoption information has been inputted, the machining condition determination support device 100 can transmit, to the machine tool 20, the target shape information 400, the path information 401, and the tool shape information (including the specified number of teeth) corresponding to the adopted machining conditions. The machine tool 20 can set parameters for the cutting operation, based on the received target shape information 400, path information 401, and tool shape information.

[6. Operation of machining condition determination support device]

Next, the operation of the machining condition determination support device 100 will be described. The processor 101 executes the machining condition determination support program 110, whereby the machining condition determination support device 100 executes a machining condition determination support process as described below.

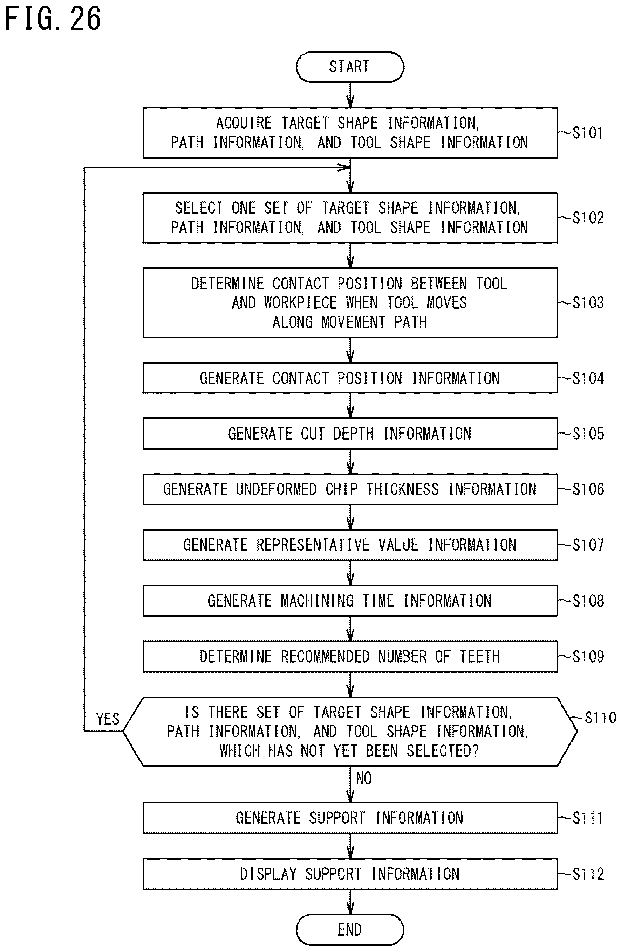

FIG. 26 is a flowchart showing an example of the machining condition determination support process.

For example, the user or the external device can input the target shape information 400, the path information 401, and the tool shape information into the machining condition determination support device 100. The user or the external device may input, instead of the target shape information 400, CAD data indicating the shape of the workpiece into the machining condition determination support device 100. In this case, the machining condition determination support device 100 can generate the target shape information 400, based on the CAD data.

The user may specify the shape of the workpiece, the movement path of the tool, and the shape of the tool including the number of teeth, to the machining condition determination support device 100 in an interactive manner. In this case, the machining condition determination support device 100 can generate the target shape information 400, the path information 401, and the tool shape information, based on the shape of the workpiece, the movement path of the tool, and the shape of the tool including the number of teeth which have been specified by the user.

The user or the external device may collectively input a plurality of sets of the target shape information 400, the path information 401, and the tool shape information, into the machining condition determination support device 100.

As described above, the processor 101 of the machining condition determination support device 100 acquires the target shape information 400, the path information 401, and the tool shape information (step S101).

The processor 101 selects a set of the target shape information 400, the path information 401, and the tool shape information (step S102).

Based on the selected set of the target shape information 400, the path information 401, and the tool shape information, the processor 101 determines a contact position between the tool and the workpiece at each tool position when the tool moves along the movement path (step S103).

The processor 101 generates contact position information 410 by arranging the determined contact positions in the order of the tool positions (step S104).

Based on the generated contact position information 410, the processor 101 calculates the radial depth of cut at each tool position, and generates cut depth information 420 (step S105).

Based on the generated contact position information 410, the processor 101 calculates, for each tooth, the undeformed chip thickness at each tool position. If a plurality of teeth are in contact with the workpiece at the same tool position, the processor 101 calculates the maximum value of the sum of the undeformed chip thicknesses of the teeth in contact with the workpiece. Thus, the processor 101 generates undeformed chip thickness information 430 (step S106).

The processor 101 calculates the maximum value, the minimum value, and the mean value of the undeformed chip thickness in the generated undeformed chip thickness information 430, thereby generating representative value information 440 (step S107).

Based on the path information 401 and the number of teeth of the tool, the processor 101 calculates, for each number of teeth, the machining time of the workpiece by the tool, thereby generating machining time information 450 (step S108).

The processor 101 compares the maximum value of the undeformed chip thickness for each number of teeth in the representative value information 440 with the first threshold value, and specifies the number of teeth that satisfies the first request (i.e., the maximum value of the undeformed chip thickness being less than or equal to the first threshold value). The processor 101 compares the machining time for each number of teeth in the machining time information 450 with the second threshold value, and specifies the number of teeth that satisfies the second request (i.e., the machining time being shorter than or equal to the second threshold value). The processor 101 specifies the number of teeth that satisfies the first request and satisfies the second request, and determines the specified number of teeth as the recommended number of teeth (step S109).

The processor 101 determines whether or not there is a set, of the target shape information 400, the path information 401, and the tool shape information, which has not yet been selected (step S110). If there is a set of the target shape information 400, the path information 401, and the tool shape information which has not yet been selected (YES in step S110), the processor 101 returns to step S102 and selects a new set of the target shape information 400, the path information 401, and the tool shape information.

If all the sets of the target shape information 400, the path information 401, and the tool shape information have been selected (NO in step S110), the processor 101 generates, for each set, support information including at least the contact position information 410 (step S111).

The processor 101 causes the display device 112 to display the generated support information (step S112). This is the end of the machining condition determination support process.

[7. Modifications]

In the above embodiment, the machining condition determination support system 10 including the machine tool 20 and the machining condition determination support device 100 has been described. However, the present disclosure is not limited thereto. For example, the machine tool may include the functions of the machining condition determination support device. In another example, the machining condition determination support device 100 may be a distributed system configured by a plurality of devices (computers) communicable with each other, or may be configured by a server that generates support information, and a client that displays the support information generated by the server.

In the above embodiment, the target shape information 400 is information indicating the two-dimensional shape of the workpiece, and the contact position between the tool and the workpiece on the two-dimensional plane is determined. However, the present disclosure is not limited thereto. The target shape information may be information indicating the three-dimensional shape of the workpiece. For example, the target shape information may be information indicating the three-dimensional shape of the workpiece, as a set of cubic unit elements having a predetermined size. Specifically, the unit elements may be voxels or dots. In this case, the tool shape information may also be information indicating the three-dimensional shape of the tool. Thus, a contact position between the tool and the workpiece in a three-dimensional space can be determined.

[8. Supplementary note]

The embodiment disclosed herein is merely illustrative and not restrictive in all aspects. The scope of the present disclosure is defined by the scope of the claims rather than the embodiments described above, and is intended to include meaning equivalent to the scope of the claims and all modifications within the scope.

**REFERENCE SIGNS LIST**

    10 machining condition determination support system
    20 machine tool
    30, 30A, 30B tool
    31, 31A, 31B teeth
    32, 32A, 32B, 32C rotation circle
    40, 40A, 40B, 40C, 40D, 40a1, 40a2, 40b1, 40b2, 40c1, 40c2, 40d1, 40d2 workpiece
    100 machining condition determination support device
    101 processor
    102 non-volatile memory
    103 volatile memory
    104 input/output interface (I/O)
    105 communication interface (communication I/F)
    110 machining condition determination support program
    111 input device
    112 display device
    121 acquisition unit

122 determination unit
123 first generation unit
124 second generation unit
125 third generation unit
126 fourth generation unit
127 calculation unit
128 recommendation unit
129 output unit
400, 400A, 400B target shape information
401, 401A, 401B path information
402 rotation circle
410, 410A, 410B contact position information
411A, 411B, 411C contact position
420, 420A, 420B cut depth information
430, 430A, 430B undeformed chip thickness information
440, 440A, 440B representative value information
450, 450A, 450B machining time information
500A, 500B support information
500_1 first support information
500_2 second support information
500_3 third support information
400_1 first target shape information
401_1 first path information
402_1 first rotation circle
410_1 first contact position information
440_1 first representative value information
450_1 first machining time information
400_2 second target shape information
401_2 second path information
402_2 second rotation circle
410_2 second contact position information
440_2 second representative value information
450_2 second machining time information
400_3 third target shape information
401_3 third path information
401_2 third path information
402_3 third rotation circle
410_3 third contact position information
440_3 third representative value information
450_3 third machining time information

**Claims**

1. A machining condition determination support device that supports determination of a machining condition for a machine tool that machines a workpiece with a tool, the device comprising:

   a determination unit configured to, based on target shape information indicating a shape of the workpiece, path information indicating a movement path of the tool, and tool shape information indicating a shape of the tool, determine a contact position between the tool and the workpiece when the tool moves along the movement path; and
   a first generation unit configured to generate contact position information indicating temporal transition of the contact position when the tool moves along the movement path.

2. The machining condition determination support device according to claim 1, wherein the contact position information is a graph including a first axis that indicates a position at which the tool is in contact with the workpiece in an apparent rotation circle of the tool, and a second axis that indicates time or the position of the tool.

17

3. The machining condition determination support device according to claim 1 or 2, further comprising a second generation unit configured to, based on the contact position information generated by the first generation unit, generate cut depth information indicating temporal transition of a radial depth of cut of the tool with respect to the workpiece.

4. The machining condition determination support device according to claim 3, wherein
the cut depth information is a graph including a first axis that indicates the radial depth of cut of the tool, and a second axis that indicates time or the position of the tool.

5. The machining condition determination support device according to any one of claims 1 to 4, further comprising a third generation unit configured to, based on the contact position information generated by the first generation unit, generate undeformed chip thickness information indicating temporal transition of an undeformed chip thickness, for each number of teeth, when the number of teeth of the tool is changed.

6. The machining condition determination support device according to claim 5, wherein
the undeformed chip thickness information is a graph including a first axis that indicates a sum of undeformed chip thicknesses corresponding to each number of teeth, and a second axis that indicates time or the position of the tool.

7. The machining condition determination support device according to claim 5 or 6, further comprising a fourth generation unit configured to, based on the undeformed chip thickness information generated by the third generation unit, generate representative value information indicating a representative value, for each number of teeth, of the undeformed chip thickness.

8. The machining condition determination support device according to claim 7, further comprising a calculation unit configured to, based on the path information and the number of teeth of the tool, calculate, for each number of teeth, a machining time of the workpiece by the tool.

9. The machining condition determination support device according to claim 8, further comprising a recommendation unit configured to determine a recommended number of teeth that is the number of teeth of the tool recommended for machining of the workpiece, based on the representative value information generated by the fourth generation unit and the machining time for each number of teeth calculated by the calculation unit.

10. The machining condition determination support device according to claim 9, wherein the recommendation unit determines, as the recommended number of teeth, a number of teeth at which the representative value of the undeformed chip thickness is less than or equal to a first threshold value and the machining time is shorter than or equal to a second threshold value.

11. The machining condition determination support device according to any one of claims 1 to 10, further comprising a display unit configured to display support information including the contact position information generated by the first generation unit.

12. The machining condition determination support device according to claim 11, wherein
the display unit simultaneously displays first support information including first contact position information generated based on first path information indicating a first movement path of the tool, and second support information including second contact position information generated based on a second path information indicating a second movement path different from the first movement path.

13. The machining condition determination support device according to any one of claims 1 to 12, wherein

the target shape information is information representing the shape of the workpiece as a set of unit elements indicating a space of a specific size, and
the determination unit specifies the unit element with which the tool comes into contact when the tool moves along the movement path, thereby determining the contact position.

14. A machining condition determination support system comprising:

the machining condition determination support device according to any one of claims 1 to 13; and
a machine tool capable of communicating with the machining condition determination support device.

**15.** A display device that receives, from the machining condition determination support device according to any one of claims 1 to 13, support information including contact position information, and displays the received support information, the contact position information indicating temporal transition of a contact position between a tool and a workpiece when the tool moves along a movement path.

**16.** A machining condition determination support method for supporting determination of a machining condition for a machine tool that machines a workpiece with a tool, the method comprising:

based on target shape information indicating a shape of the workpiece, path information indicating a movement path of the tool, and tool shape information indicating a shape of the tool, determining a contact position between the tool and the workpiece when the tool moves along the movement path; and
generating contact position information indicating temporal transition of the contact position when the tool moves along the movement path.

**17.** A machining condition determination support program for supporting determination of a machining condition for a machine tool that machines a workpiece with a tool, the program causing a computer to execute:

based on target shape information indicating a shape of the workpiece, path information indicating a movement path of the tool, and tool shape information indicating a shape of the tool, determining a contact position between the tool and the workpiece when the tool moves along the movement path; and
generating contact position information indicating temporal transition of the contact position when the tool moves along the movement path.

FIG. 1

10

| MACHINING CONDITION DETERMINATION SUPPORT DEVICE | | MACHINE TOOL |
|---|---|---|

100                                           20

FIG. 2A

FIG. 2B

FIG. 3A

FIG. 3B

FIG. 4

FEED PER TOOTH

# FIG. 5A

FIG. 5B

θ=90(degree)

h=fz

fz    h

LOCUS OF TOOTH 31B

LOCUS OF TOOTH 31A

# FIG. 5C

LOCUS OF TOOTH 31B

LOCUS OF TOOTH 31A

$\theta = 60$

$h = \dfrac{\sqrt{3}}{2} fz$

$fz$

$h$

FIG. 6A

FIG. 6B

FIG. 7

# FIG. 8

# FIG. 9

NON-VOLATILE MEMORY 102

MACHINING CONDITION DETERMINATION SUPPORT PROGRAM 110

100

PROCESSOR 101

VOLATILE MEMORY 103

I/O 104

COMMUNICATION I/F 105

INPUT DEVICE 111

DISPLAY DEVICE 112

FIG. 10

# FIG. 11

100

121 — ACQUISITION UNIT

122 — DETERMINATION UNIT

123 — FIRST GENERATION UNIT

124 — SECOND GENERATION UNIT

125 — THIRD GENERATION UNIT

126 — FOURTH GENERATION UNIT

127 — CALCULATION UNIT

128 — RECOMMENDATION UNIT

129 — OUTPUT UNIT

111 — DISPLAY DEVICE

FIG. 12

402　　　　　401　　　400

FIG. 13

# FIG. 14

410

CONTACT POSITION

TOOL POSITION

# FIG. 15

420

TOOL POSITION

RADIAL DEPTH OF CUT

# FIG. 16

FIG. 17

FIG. 18A

FIG. 18B

FIG. 19

FIG. 20

FIG. 21

FIG. 22

FIG. 23

EP 4 459 397 A1

FIG. 24

EP 4 459 397 A1

# FIG. 25

EP 4 459 397 A1

# FIG. 26

```
                    ┌─────────────┐
                    │    START    │
                    └──────┬──────┘
                           ▼
        ┌──────────────────────────────────────────┐
        │        ACQUIRE TARGET SHAPE INFORMATION,  │ ~S101
        │  PATH INFORMATION, AND TOOL SHAPE INFORMATION │
        └──────────────────┬───────────────────────┘
                           ▼
        ┌──────────────────────────────────────────┐
        │    SELECT ONE SET OF TARGET SHAPE INFORMATION, │ ~S102
        │  PATH INFORMATION, AND TOOL SHAPE INFORMATION  │
        └──────────────────┬───────────────────────┘
                           ▼
        ┌──────────────────────────────────────────┐
        │   DETERMINE CONTACT POSITION BETWEEN TOOL │ ~S103
        │      AND WORKPIECE WHEN TOOL MOVES        │
        │          ALONG MOVEMENT PATH             │
        └──────────────────┬───────────────────────┘
                           ▼
        ┌──────────────────────────────────────────┐
        │    GENERATE CONTACT POSITION INFORMATION  │ ~S104
        └──────────────────┬───────────────────────┘
                           ▼
        ┌──────────────────────────────────────────┐
        │       GENERATE CUT DEPTH INFORMATION      │ ~S105
        └──────────────────┬───────────────────────┘
                           ▼
        ┌──────────────────────────────────────────┐
        │  GENERATE UNDEFORMED CHIP THICKNESS INFORMATION │ ~S106
        └──────────────────┬───────────────────────┘
                           ▼
        ┌──────────────────────────────────────────┐
        │   GENERATE REPRESENTATIVE VALUE INFORMATION │ ~S107
        └──────────────────┬───────────────────────┘
                           ▼
        ┌──────────────────────────────────────────┐
        │     GENERATE MACHINING TIME INFORMATION   │ ~S108
        └──────────────────┬───────────────────────┘
                           ▼
        ┌──────────────────────────────────────────┐
        │    DETERMINE RECOMMENDED NUMBER OF TEETH  │ ~S109
        └──────────────────┬───────────────────────┘
                           ▼
     YES ╱─────────────────────────────────────────╲ ~S110
    ◄────   IS THERE SET OF TARGET SHAPE INFORMATION,
         ╲ PATH INFORMATION, AND TOOL SHAPE INFORMATION,
            WHICH HAS NOT YET BEEN SELECTED?        ╱
            ╲─────────────────────────────────────╱
                           │ NO
                           ▼
        ┌──────────────────────────────────────────┐
        │       GENERATE SUPPORT INFORMATION        │ ~S111
        └──────────────────┬───────────────────────┘
                           ▼
        ┌──────────────────────────────────────────┐
        │       DISPLAY SUPPORT INFORMATION         │ ~S112
        └──────────────────┬───────────────────────┘
                           ▼
                    ┌─────────────┐
                    │     END     │
                    └─────────────┘
```

| INTERNATIONAL SEARCH REPORT | International application No. |
|---|---|
| | **PCT/JP2023/004823** |

**A. CLASSIFICATION OF SUBJECT MATTER**

*G05B 19/4093*(2006.01)i
FI: G05B19/4093 F

According to International Patent Classification (IPC) or to both national classification and IPC

**B. FIELDS SEARCHED**

Minimum documentation searched (classification system followed by classification symbols)

G05B 19/18- 19/416

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/025149 A1 (DMG MORI SEIKI CO., LTD.) 11 February 2021 (2021-02-11) paragraphs [0034]-[0051], [0059]-[0060], fig. 3-13, 15-16 | 1-4, 11, 13-17 |
| A | | 5-10, 12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/004823**

| Patent document cited in search report | | | Publication date (day/month/year) | Patent family member(s) | | | Publication date (day/month/year) |
|---|---|---|---|---|---|---|---|
| WO | 2021/025149 | A1 | 11 February 2021 | US | 2022/0283564 | A1 | |
| | | | | paragraphs [0062]-[0079], | | | |
| | | | | [0087]-[0088], fig. 3-13, 15-16 | | | |
| | | | | EP | 3995914 | A1 | |
| | | | | CN | 114174941 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021025149 A
- JP 2016162149 A
- JP 2017068586 A
- JP S63298571 A
- JP H772914 A
- JP H5237740 A
- JP H5123938 A
- JP 2021026598 A
- JP 2008134813 A
- JP 2002116807 A
- JP 2002200540 A